(19) Europäisches Patentamt / European Patent Office / Office européen des brevets

(11) **EP 3 596 434 B1**

(12) **EUROPEAN PATENT SPECIFICATION**

(45) Date of publication and mention of the grant of the patent:
**29.01.2025 Bulletin 2025/05**

(21) Application number: **17828909.6**

(22) Date of filing: **21.12.2017**

(51) International Patent Classification (IPC):
**G01J 3/26** $^{(2006.01)}$     **G01J 3/28** $^{(2006.01)}$

(52) Cooperative Patent Classification (CPC):
**G01J 3/26; G01J 3/2823;** G01J 3/0224; G01J 2003/2826

(86) International application number:
**PCT/EP2017/084158**

(87) International publication number:
**WO 2018/115320 (28.06.2018 Gazette 2018/26)**

(54) **OPTICAL SYSTEM**

OPTISCHES SYSTEM

SYSTÈME OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2016 PCT/EP2016/082054**

(43) Date of publication of application:
**22.01.2020 Bulletin 2020/04**

(73) Proprietor: **CSEM Centre Suisse d'Electronique et de Microtechnique SA - Recherche et Développement 2002 Neuchâtel (CH)**

(72) Inventors:
* **STANLEY, Ross**
  **1066 Epalinges (CH)**
* **CHEBIRA, Amina**
  **1004 Lausanne (CH)**
* **DUNBAR, Liza Andrea**
  **2072 Saint-Blaise (CH)**
* **PAD, Pedram**
  **1007 Lausanne (CH)**

(74) Representative: **Byrne, Declan et al**
**André Roland SA**
**IP Attorneys & Services**
**Avenue Collonges 21**
**1004 Lausanne (CH)**

(56) References cited:
**WO-A1-2013/048548**    **WO-A1-2013/064512**
**WO-A1-2014/031557**    **US-A1- 2014 375 776**
**US-A1- 2016 037 022**

* **ROARKE HORSTMEYER ET AL: "Flexible multimodal camera using a light field architecture", 2009 IEEE INTERNATIONAL CONFERENCE ON COMPUTATIONAL PHOTOGRAPHY (ICCP 2009), IEEE, US, 16 April 2009 (2009-04-16), pages 1 - 8, XP031740275, ISBN: 978-1-4244-4534-9**
* **HAGEN NATHAN ET AL: "Review of snapshot spectral imaging technologies", OPTICAL ENGINEERING, SOC. OF PHOTO-OPTICAL INSTRUMENTATION ENGINEERS, BELLINGHAM, vol. 52, no. 9, 1 September 2013 (2013-09-01), pages 90901, XP060026022, ISSN: 0091-3286, [retrieved on 20130923], DOI: 10.1117/1.OE.52.9.090901**

## Description

## FIELD OF THE INVENTION

This present invention concerns optical systems, for example, a snapshot hyper or multi-spectral optical system or an optical system for carrying out light intensity filtering or polarization filtering.

More particularly, the present invention concerns hyper or multi-spectral optical systems for obtaining image data, for example, in the spatial or in the frequency (Fourier) domain at a plurality of different wavelengths via a configuration in which a multiple wavelength filter array is repeated in a pixel like manner so as to filter different parts of an imaged object (in a similar manner to the known Bayer filter configuration), or via a configuration in which multiple images of an object are generated where each of the generated multiple images is filtered at a specific wavelength.

The present invention also concerns hyper or multi-spectral optical systems for obtaining multi-/hyper-spectral hypercube measurements of an object.

## BACKGROUND

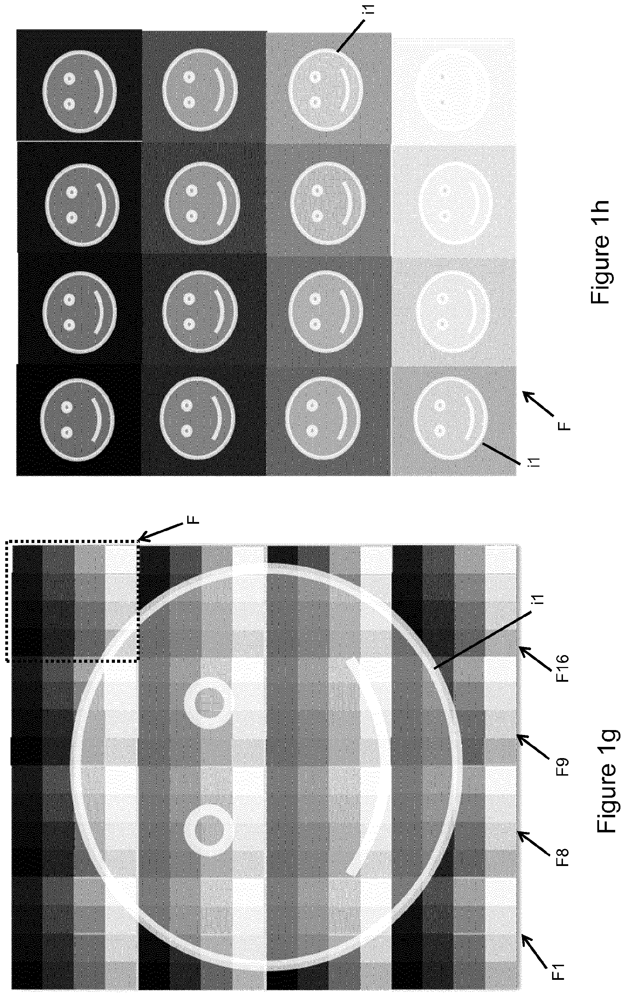

A snapshot hyper/multi-spectral camera takes images at multiple wavelengths. There are many ways of organising the spatial and wavelength information on the detector or image sensor. The two most common configurations are to group the wavelength information in "super" pixels at the detector - this is the system used in a color camera with the well-known Bayer configuration (configuration **A,** Figure 1g), or to group the spatial information together as multiple images on the detector where each image has a different wavelength (configuration **B,** Figure 1h). Conceptually these two can be seen in Figures 1g and 1h.

In both configurations one challenge is the fabrication of the filters to achieve wavelength selection.

The filters can be either on or immediately in front of the detector, or they can be imaged onto the detector or they can simply block all parallel paths leading to the detector, which can be used in the case of an effective multicamera array, i.e. the system is set up as if it were an array of cameras but using a single detector.

If the filters are placed on or near the detector there are two issues, firstly the individual filters should be either the size of the pixel in configuration **A** (Figure 1g) or the size of one of the images in configuration **B** (Figure 1h) which can be very small or fixed, and secondly when the filters are placed near the detector the range of angle that the filter sees is the same as the numerical aperture of the camera. For sensitive cameras the numerical aperture is generally large leading to a wide range of angles on the filter. Filters such as standard narrow band filters are strongly angular dependent so this limits the linewidth of the filter.

To address these two inconveniences, the filter can be placed elsewhere and away from the detector. If the filters are placed elsewhere and reimaged onto the detector, there are at least two system configurations that may limit the number of filters.

In one system configuration, the filter is reimaged behind a microlens array to recreate configuration **A** (Figure 1g), this is a filtered *Plenoptics 1.0* configuration in terms of light field imaging. Here we call this system configuration **A** as the goal of this system configuration is to produce a super-pixel configuration as schematically shown in Figure 1g. For comprehension reasons, this system configuration is shown to a limited extent in Figures 4 and 5, each part of an object 1 is imaged using two lenses (a first lens 2, and a second lens 3) onto part of a microlens array 4.

The microlens array 4 images an aperture 6 onto the detector. The filter can be put at the aperture stop 6, which allows an identical array of images of the filter to be made on the detector. The aperture stop 6 limits the cross sectional area of the bundle of rays from the object 1 to the image point. Here the aperture stop 6 at the focal point of the lens 2 controls the distribution of rays over the surface of lens elements of the microlens array 4 for the purpose of controlling the perspective of the object 1 allowing a telecentric scheme.

In the second system configuration in which a limited number of filters would be used, (here we call this system configuration **B** as the goal of this system configuration is to produce multiple images of the object as schematically shown in Figure 1h), the microlens array 4 could be used to form multiple parallel images of an object, and the filter could be either placed just behind or in front of the microlens array 4. The multiple parallel images are each filtered at a specific wavelength by the filter.

The advantages of both of the above system configurations are that the size of the filters is not limited by the size of the detector, and the range of angles impinging on the filters can be made smaller by the same amount. The smaller angles incident on the filter permit an improved filtering function to be achieved. Additionally, it is less expensive to implement such a system compared to attaching individual filtering tiles onto a sensor. The filter is not located on the sensor and allows a large number of possibilities for locating the filter in the system as there is a flexible choice concerning the positioning of the filter in the system. Furthermore, the filter can be easy changed or replaced thus providing an adaptive system. Finally, only one filter is required and there is no absolute need to include multiple filters.

In all the above cases, the number of filters is the same as the number of wavelengths to be filtered and it is assumed that it is possible to make an array of filters, one for each wavelength. However, arrays of filters are both difficult and expensive to manufacture.

Moreover, it is also desired to provide a hyper or multi-spectral optical system for obtaining multi-/hyper-spectral hypercube measurements of an object.

WO2014031557A1 discloses a flexible, multispectral, light field imaging system comprising holographically-formed polymer dispersed liquid crystal (H-PDLC) stacks in a plenoptic camera architecture that may capture multispectral light field data from a scene. Through manipulation of this multispectral light field data, digitally refocused spectral images may be created at different, selectable focal depths, with a single exposure.

The article "Review of snapshot spectral imaging technologies" by HAGEN NATHAN ET AL published in OPTICAL ENGINEERING, SOC. OF PHOTO-OPTICAL INSTRUMENTATION ENGINEERS, BELLINGHAM, vol. 52, no. 9, doi:10.1117/1.OE.52.9.090901, ISSN 0091-3286, (20130901), page 90901 discloses that within the field of spectral imaging, the vast majority of instruments used are scanning devices. Recently, several snapshot spectral imaging systems have become commercially available, providing new functionality for users and opening up the field to a wide array of new applications. A comprehensive survey of the available snapshot technologies is provided, and an attempt has been made to show how the new capabilities of snapshot approaches can be fully utilized. US2014375776A1 provides wavelength discriminating imaging systems and methods that spatially separate (over different depths) the wavelength constituents of an image using a dispersive lens system or element, such that this spectral information may be exploited and used. The wavelength constituents of an image are deconstructed and identified over different depths using a dispersive lens system or element.

WO2013048548A1 discloses a programmable, many-band spectral imager based on addressable spatial light modulators (ASLMs), such as micro-mirror-, micro-shutter- or liquid-crystal arrays, is described. Capable of collecting at once, without scanning, a complete two-dimensional spatial image with ASLM spectral processing applied simultaneously to the entire image, optical assemblies are employed wherein light from all image points is forced to impinge at the same angle onto the dispersing element, eliminating interplay between spatial position and wavelength. This is achieved, as examples, using telecentric optics to image light at the required constant angle, or with micro-optical array structures, such as micro-lens- or capillary arrays, that aim the light on a pixel-by-pixel basis. Light of a given wavelength then emerges from the disperser at the same angle for all image points, is collected at a unique location for simultaneous manipulation by the ASLM, then recombined with other wavelengths to form a final spectrally-processed image.

WO2013064512A1 discloses a spectral camera for producing a spectral output having an objective lens for producing an image, an array of mirrors, an array of filters for passing a different passband of the optical spectrum for different ones of the optical channels arranged so as to project multiple of the optical channels onto different parts of the same focal plane, and a sensor array at the focal plane o detect the filtered image copies simultaneously. By using mirrors, there may be less optical degradation and the trade off of cost with optical quality can be better. By projecting the optical channels onto different parts of the same focal plane a single sensor or coplanar multiple sensors can to be used to detect the different optical channels simultaneously which promotes simpler alignment and manufacturing.

## SUMMARY

It is therefore one aspect of the present disclosure to provide an optical system that overcomes the above inconveniences.

The optical system preferably includes

- at least one objective lens;

- an optical filter;

- an imaging lens, or a first aperture array comprising a plurality of aperture elements;

wherein the at least one objective lens, the optical filter, and the imaging lens or first aperture array are arranged along an optical axis to form at least one projection of the optical filter on the imaging lens or on the first aperture array, and wherein the optical system further includes a filter selection means for selecting filtered electromagnetic radiation to be provided to the imaging lens or the first aperture array.

The at least one objective lens is located at a position upstream from the first aperture array or the imaging lens and the optical filter and the filter selection means are located at a position upstream from the at least one objective lens so that the first aperture array or the imaging lens images an object located upstream of the objective lens onto an image sensor plane to provide at least one or a plurality of images of the object at the image sensor plane and so that the optical filter is imaged by the objective lens onto at least a part of the first aperture array or the imaging lens to filter the at least one or the plurality of images of the object as if the optical filter was physically placed in contact with the first aperture array or the imaging lens.

This optical system advantageously permits multi-/hyper-spectral hypercube measurements of an object to be obtained.

According to one aspect of the present disclosure, the imaging lens or the first aperture array is arranged in the optical system to form at least one projection of an object to be filtered on a second aperture array or a second aperture array plane.

According to another aspect of the present disclosure, the filter selection means is configured to select a filtering zone or filtering zones of the filter to select the filtered electromagnetic radiation to be provided to the imaging lens or the first aperture array.

According to yet another aspect of the present disclosure, the filter selection means comprises a plurality of addressable areas configured to allow or block electromagnetic radiation through said areas to respectively allow or block electromagnetic radiation through the filter selection means.

According to another aspect of the present disclosure, the filter selection means is configured to define at least one or a plurality of patterns through which the electromagnetic radiation passes.

According to another aspect of the present disclosure, the filter selection means is configured to define a transparent band through which the electromagnetic radiation passes.

According to another aspect of the present disclosure, the filter selection means is configured to define a transparent band through which the electromagnetic radiation passes, and configured to define opaque areas or zones around the transparent band blocking the transmission of electromagnetic radiation.

According to another aspect of the present disclosure, the filter selection means is configured to define a transparent band through which the electromagnetic radiation passes, and configured to define opaque areas or zones around the transparent band blocking the transmission of electromagnetic radiation such that only the transparent band allows electromagnetic radiation to pass through to the imaging lens or the first aperture array.

According to another aspect of the present disclosure, the filter selection means is configured to displace or sweep the transparent band to permit spectrum sweeping.

According to another aspect of the present disclosure, the filter selection means is configured to displace or sweep the transparent band to carry-out a push-broom scan.

According to another aspect of the present disclosure, the filter selection means is located downstream from the filter, or is located upstream from the filter.

According to another aspect of the present disclosure, the filter selection means contacts directly or indirectly the filter.

According to another aspect of the present disclosure, the filter selection means comprises or consists solely of an electronically addressable optical device comprising a plurality of electronically addressable zones, areas or pixels configured to block or permit light transmission when addressed electronically.

According to another aspect of the present disclosure, the filter selection means comprises or consists solely of a spatial light modulator comprising a plurality of electronically addressable zones, areas or pixels.

According to another aspect of the present disclosure, the filter selection means comprises or consists solely of an electronically addressable optical device comprising a liquid crystal and a plurality of electronically addressable zones, areas or pixels containing liquid crystal material.

According to another aspect of the present disclosure, the filter selection means comprises or consists solely of a liquid crystal device or a Digital micro-mirror device.

According to another aspect of the present disclosure, the first aperture array is an array of image forming elements comprising a plurality of image forming elements.

According to another aspect of the present disclosure, the system further includes a second aperture array including an image sensor comprising a plurality of light sensing elements.

According to another aspect of the present disclosure, the optical system includes the first aperture array and the first aperture array includes an array of image forming elements comprising a plurality of lenses, micro-lenses or pinholes; and wherein the first aperture array is arranged in the optical system to form a plurality of whole or integral replications of an object on a sensor plane or sensor array; and wherein the filter is imaged to form the at least one projection on the first aperture array to filter the plurality of integral or whole object replications.

According to another aspect of the present disclosure, the optical filter comprises or is a mosaic filter including a plurality of individual optical filters.

According to another aspect of the present disclosure, each individual optical filter is configured to filter at a different wavelength.

According to another aspect of the present disclosure, the optical filter is configured to filter a plurality of different wavelengths

According to another aspect of the present disclosure, the optical filter is configured to filter the same wavelength along a constant filtering direction of the filter.

According to another aspect of the present disclosure, the optical filter includes a filtering section, the filtering section defining an incident surface area, the filtering section including the constant filtering direction and being further configured to continuously filter at different wavelengths along a direction of the incident surface area following a vertical direction to the constant filtering direction.

According to another aspect of the present disclosure, a filtering section is further configured to continuously filter at different wavelengths along any direction or all directions non-parallel to the constant filtering direction across the incident surface area.

According to another aspect of the present disclosure, an optical thickness of the filtering section varies across the entire filtering section along said vertical direction or along said any direction or all directions non-parallel to the constant filtering direction, or across only a portion of the filtering section along said vertical direction or along said any direction or all directions non-parallel to the constant filtering direction.

According to another aspect of the present disclosure, the optical thickness of the filtering section varies continuously in a linear or non-linear manner, and/or varies according to a step-profile.

According to another aspect of the present disclosure, the filtering section includes a filter which varies in thickness.

According to another aspect of the present disclosure, the filter varies in thickness across all directions non-parallel to the constant filtering direction.

According to another aspect of the present disclosure, wherein the filtering section has an optical thickness constant across the entire filtering section along only one direction defining the constant filtering direction, and wherein said filtering section is orientated about the optical axis such that the direction of constant optical thickness of the filtering section is orientated at an angle relative to the array of image forming elements or relative to the image sensor.

According to another aspect of the present disclosure, the filtering section filters the same wavelength along the direction of constant optical thickness.

According to another aspect of the present disclosure, the filter is configured to filter different wavelengths along at least one direction non-parallel to the constant filtering direction along at least a portion of the filter.

According to another aspect of the present disclosure, the filter is configured to continuously filter at different wavelengths along the at least one direction non-parallel to the constant filtering direction along at least a portion of the filter.

According to another aspect of the present disclosure, the optical filter and/or the filter selection means are located upstream of the at least one objective lens.

According to another aspect of the present disclosure, the optical filter and/or the filter selection means are arranged along the optical axis in an object space in which an object to be imaged by the system is located, or substantially at an object position at an object distance from the objective lens.

According to another aspect of the present disclosure, the system is a telecentric in image space and/or in object space.

According to another aspect of the present disclosure, the optical filter is or is defined by an image of an optical filter or a real image of an optical filter image.

According to another aspect of the present disclosure, the image forming elements of the array comprise lenses, micro-lenses or pinholes.

According to another aspect of the present disclosure, the optical system is a multi-spectral optical system or a hyper-spectral optical system.

Another aspect of the present disclosure concerns a device, such as a camera or smart phone, including the previously mentioned optical system.

Other advantageous features are found in the other dependent claims.

The above and other objects, features and advantages of the present invention and the manner of realizing them will become more apparent, and the invention itself will best be understood from a study of the following description with reference to the attached drawings showing some preferred embodiments of the invention.

## A BRIEF DESCRIPTION OF THE SEVERAL VIEWS OF THE DRAWINGS

The above object, features and other advantages of the present invention will be best understood from the following detailed description in conjunction with the accompanying drawings, in which:

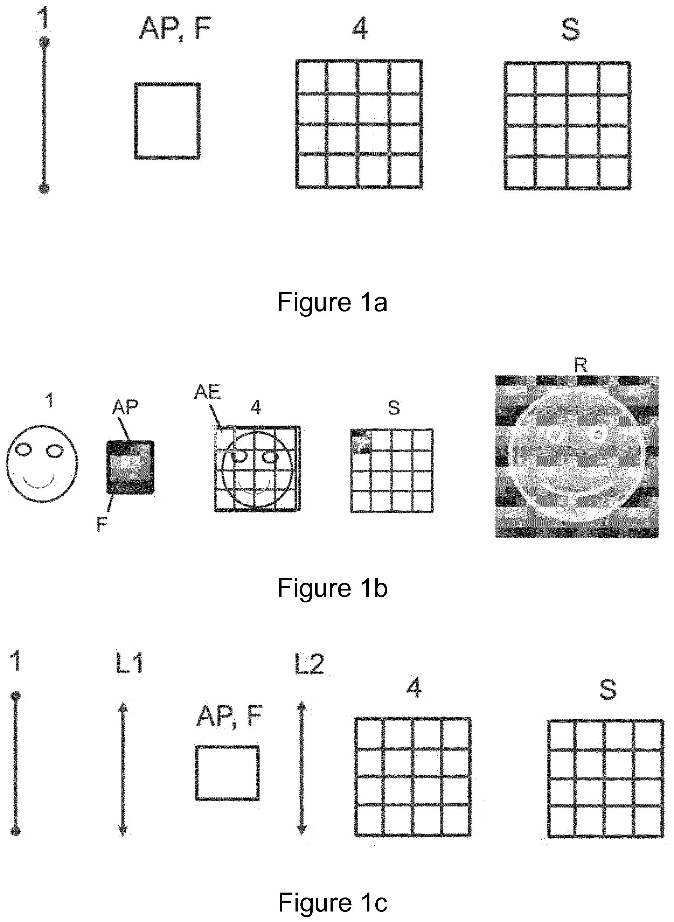

FIGURES 1a to 1f schematically show illustrations of the principle of operation of embodiments of the optical system of the present disclosure, some of which correspond to the claimed invention;

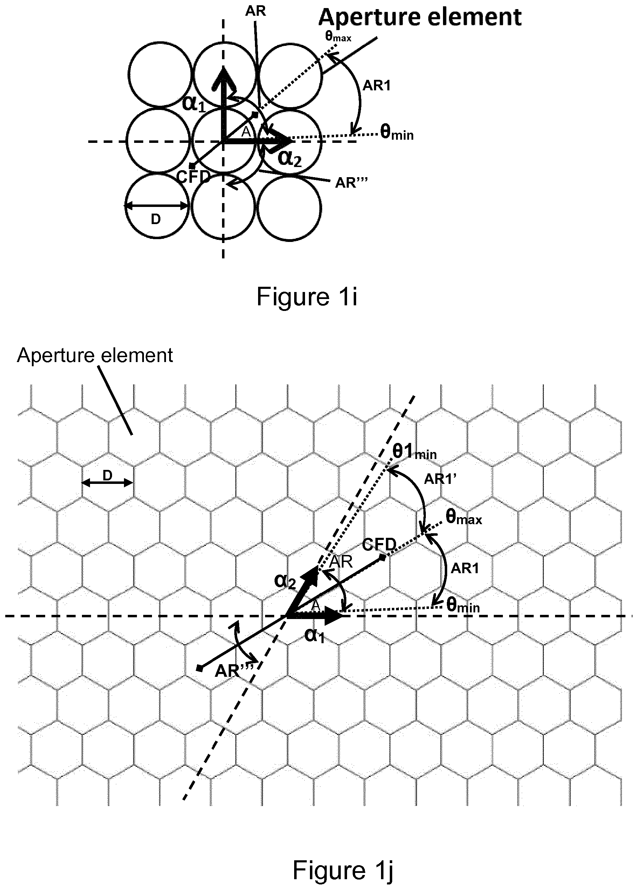

FIGURE 1i shows a schematic illustration of a first or second aperture array;

FIGURE 1j shows a further schematic illustration of a first or second aperture array;

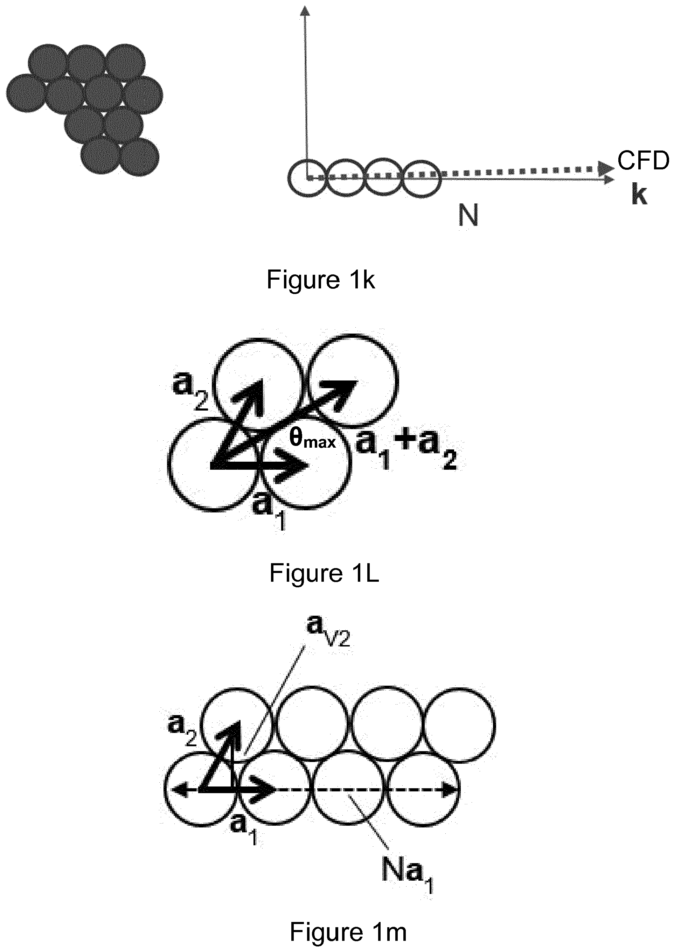

FIGURES 1k is a schematic illustration of a hexagonal first or second aperture array and an orientation of a constant filtering direction away from a natural filtering alignment;

FIGURES 1L and 1m are schematic illustrations of a hexagonal first or second aperture array;

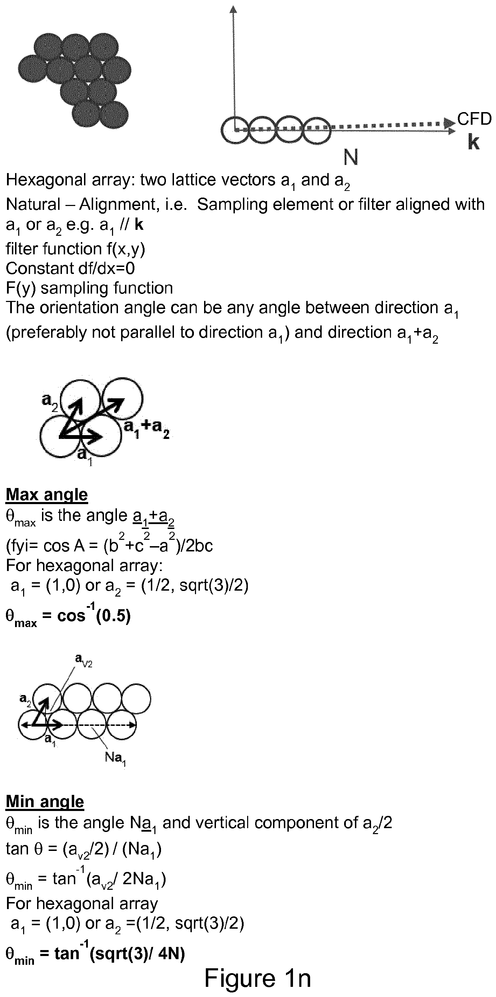

FIGURE 1n shows further details concerning the determination of angle $\theta_{max}$ and angle $\theta_{min}$;

FIGURE 1g schematically shows a Super pixel configuration or arrangement similar to the Bayer configuration which is the type of images that are generated in a Plenoptics 1.0 optical system configuration;

FIGURE 1h schematically shows a configuration or arrangement where a multiple series of images are generated and are each filtered;

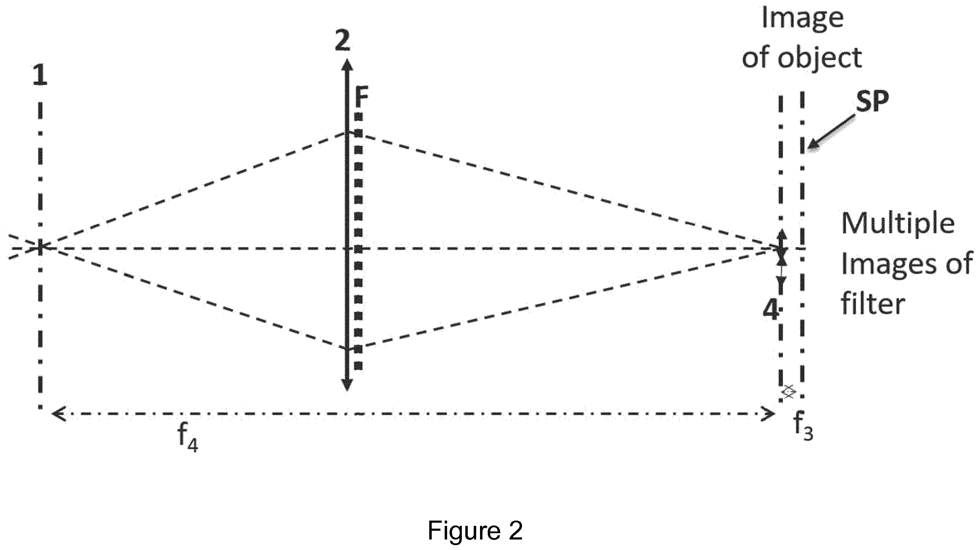

FIGURE 2 schematically shows an exemplary hyper or multi-spectral optical system according to one embodiment of the present disclosure, not falling in the scope of the claimed invention;

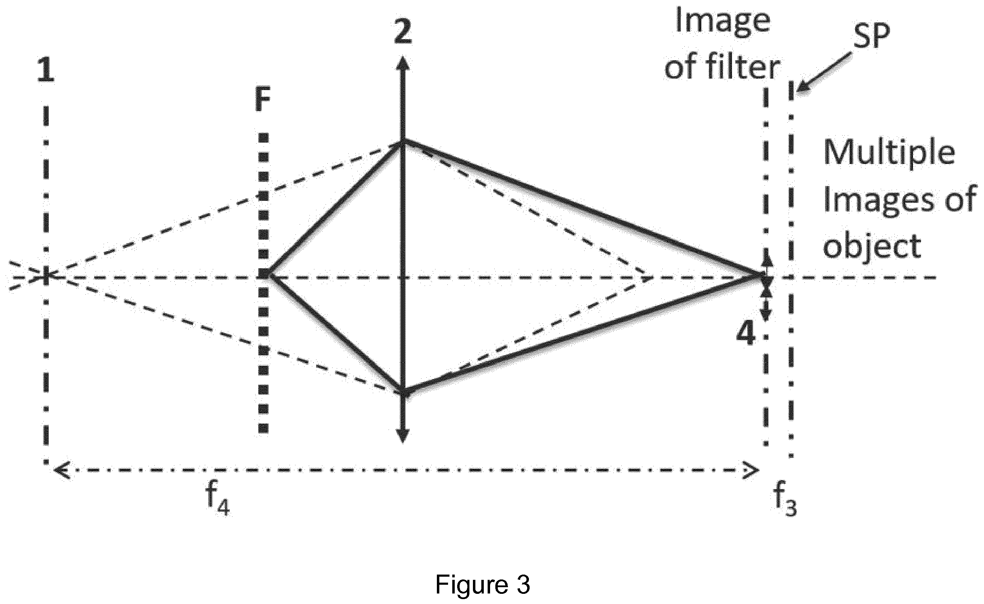

FIGURE 3 schematically shows an exemplary hyper or multi-spectral optical system according to another embodiment of the present disclosure, not falling under the scope of the claimed invention;

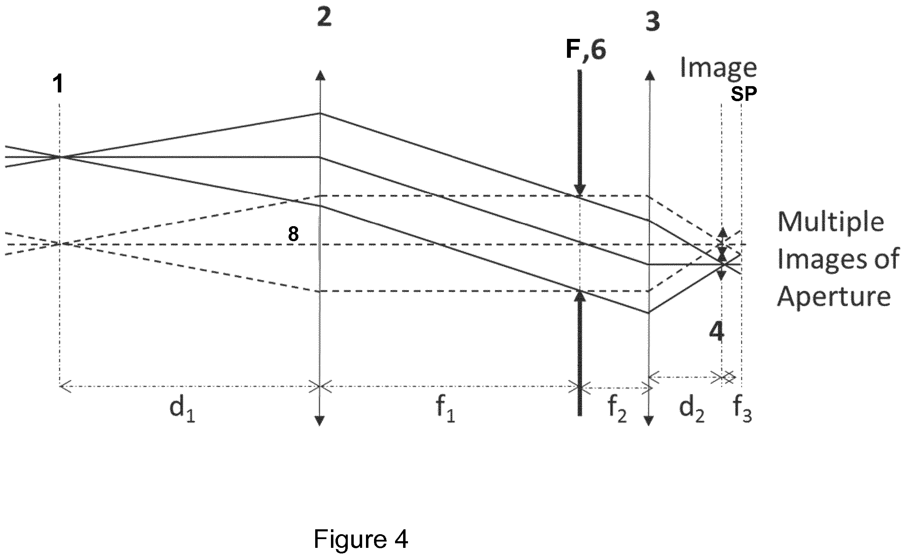

FIGURES 4 to 6 schematically shows an exemplary hyper or multi-spectral optical system according to another embodiment of the present disclosure, not falling under the scope of the claimed invention;

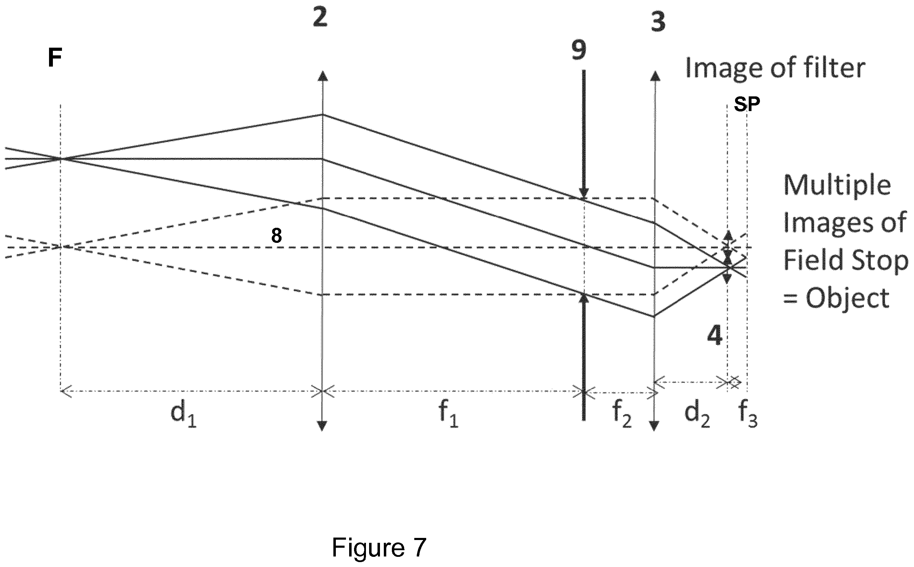

FIGURES 7 to 8 schematically shows an exemplary hyper or multi-spectral optical system according to another embodiment of the present disclosure, not falling under the scope of the claimed invention;

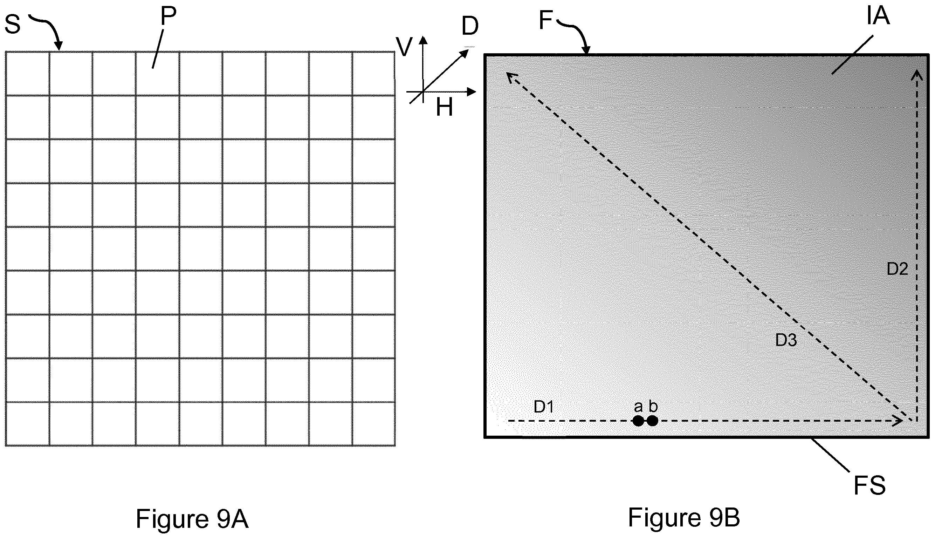

FIGURE 9A schematically illustrates an image sensor comprising a plurality of light sensing elements or pixels (or super-pixels) P extending in a vertical direction V and a plurality of light sensing elements or pixels P extending in a horizontal direction H, the horizontal direction H being perpendicular to the vertical direction V;

FIGURE 9B schematically illustrates an exemplary optical filter including a filtering section according to the present disclosure;

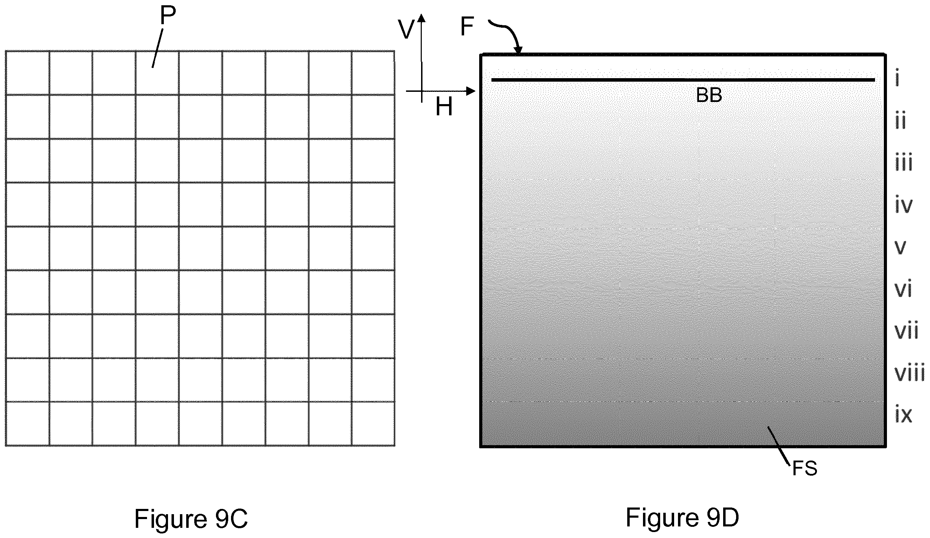

FIGURE 9C schematically illustrates an image sensor, identical to that of Figure 9A, comprising a matrix of pixels, or alternatively an array of image forming elements such as microlenses;

FIGURE 9D schematically illustrates an optical filter that is formed using a graded filter where i to ix represents positions on the filter having a different peak transmission wavelength;

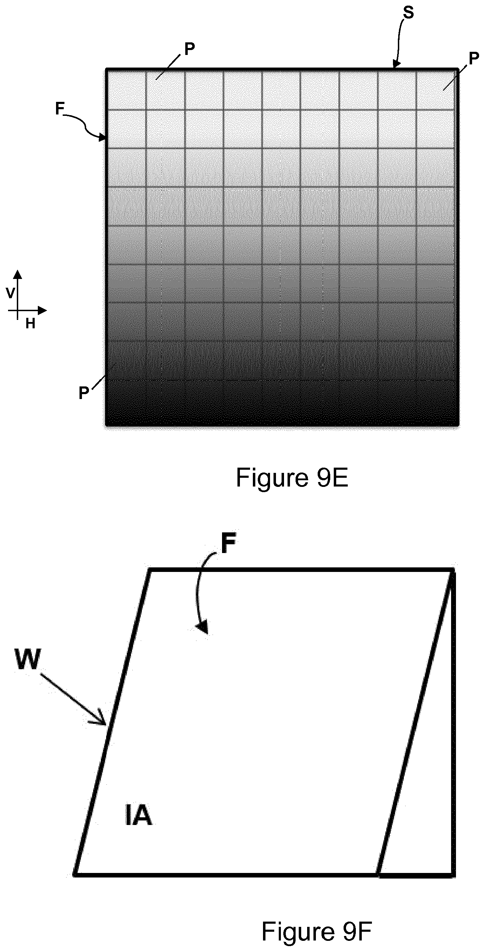

FIGURE 9E illustrates an image sensor or array of imaging elements comprising a NxN array of elements, and the graded filter of Figure 9D which is aligned with the horizontal axis H of the sensor or array of imaging elements;

FIGURE 9F shows one example of an optical filter including a filtering section FS according to the present disclosure;

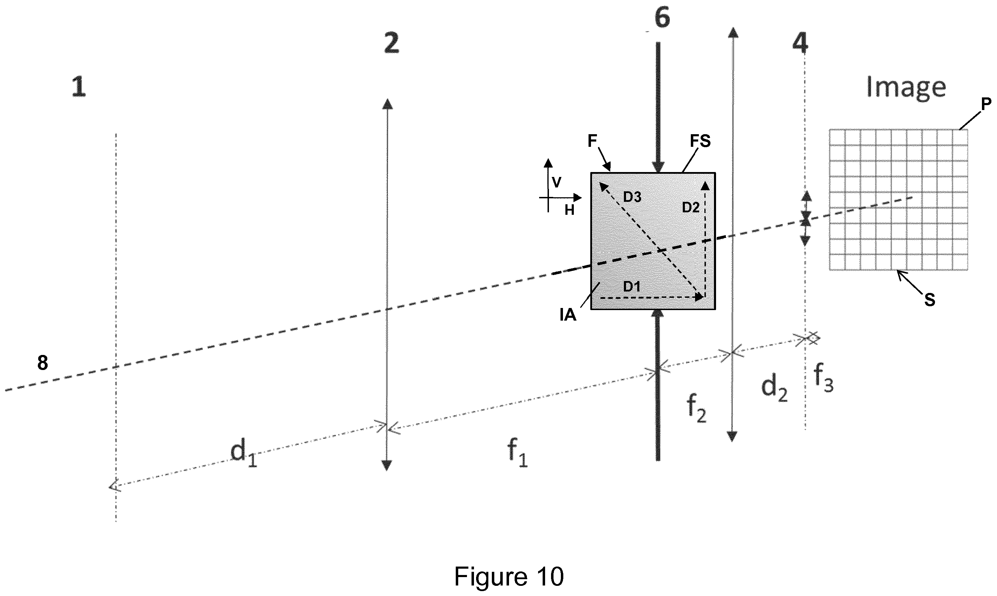

FIGURE 10 schematically shows the same optical system of Figures 4 to 6 from a perspective view showing the optical axis through the system and including the optical filter of Figure 9B;

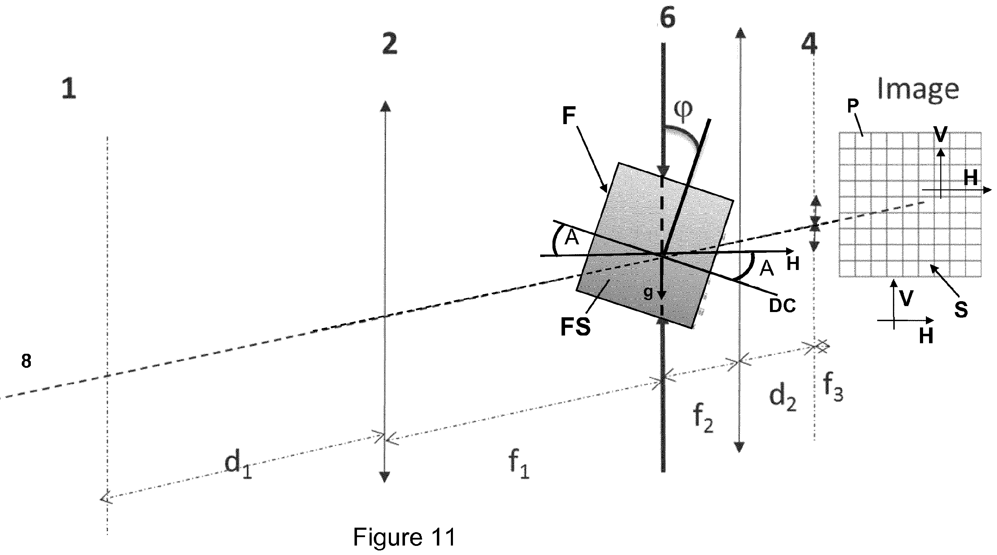

FIGURE 11 schematically shows the same optical system of Figures 4 to 6 from a perspective view and including the optical filter of Figure 9D, the filter is rotated at angle φ relative to the optical axis at the aperture and is rotated with respect to the horizontal axis of the image sensor and/or the array of imaging elements;

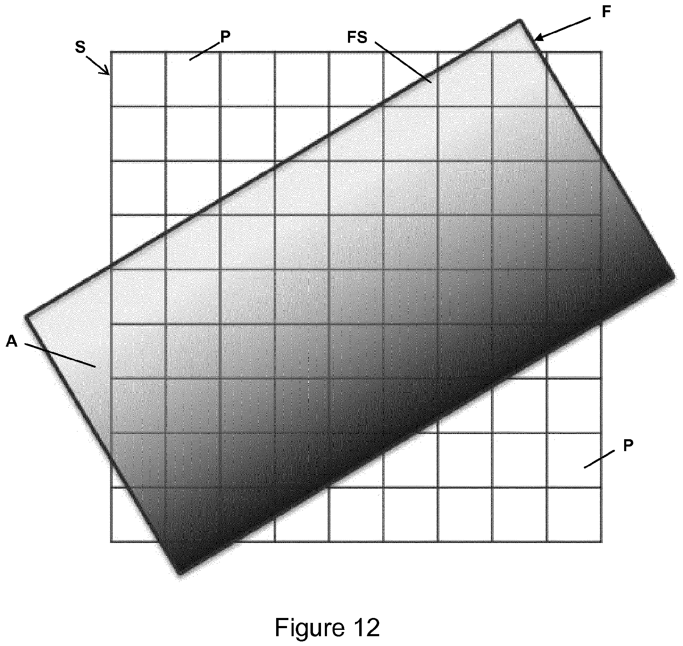

FIGURE 12 schematically shows a linear graded filter aligned at 45° to one of the axis of the image sensor or or array of imaging elements that comprise an NxN array of elements;

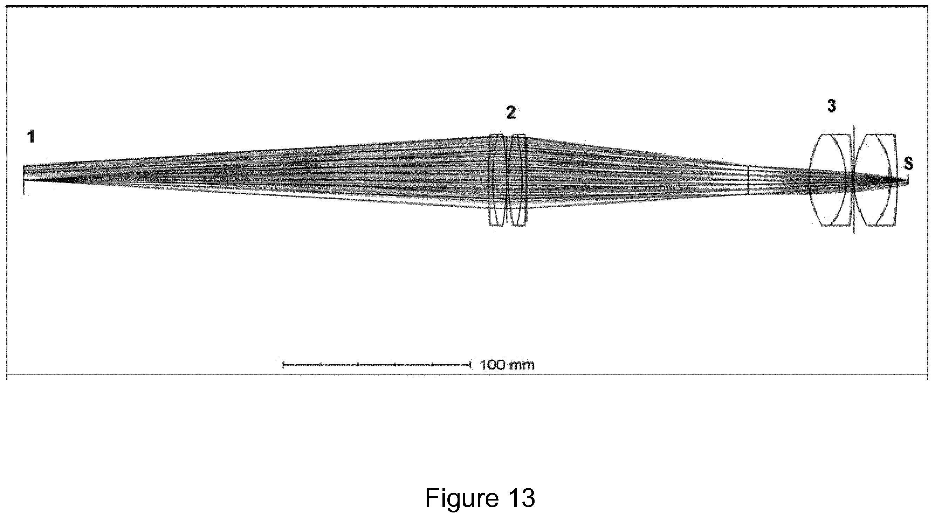

FIGURE 13 shows system modeling in Zemax using a pair of achromatic lenses with long working distances to implement a telecentric design;

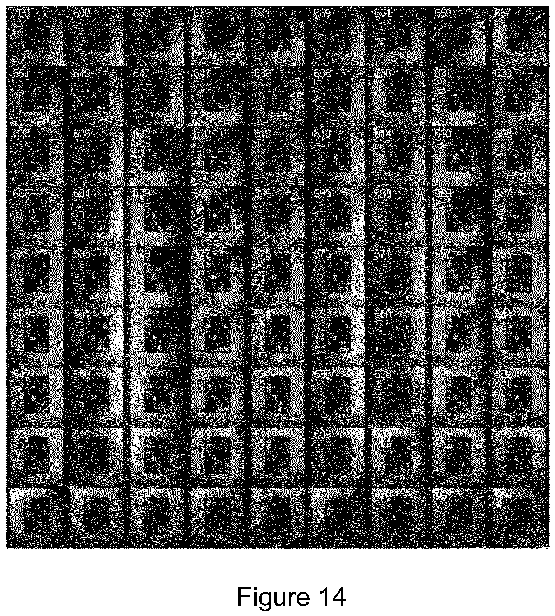

FIGURE 14 shows results produced by an exemplary optical system built, based on the system modelling shown in Figure 13, using a pair of achromatic lenses and a tilted graded filter such as that shown in Figure 11, the filtered wavelength is assigned in the image of Figure 14;

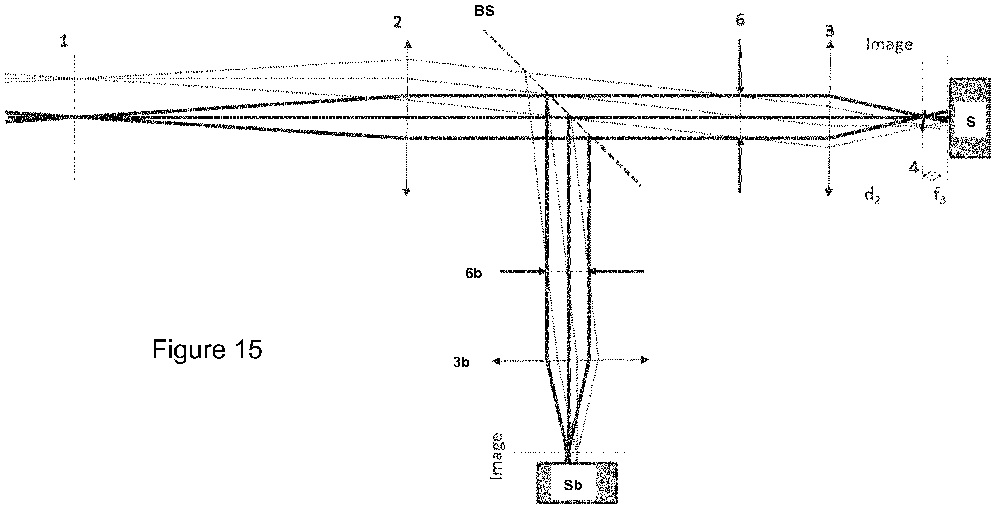

FIGURES 15 to 17 schematically show the inclusion of a beam-splitter in the optical system for example to increase spatial resolution; and

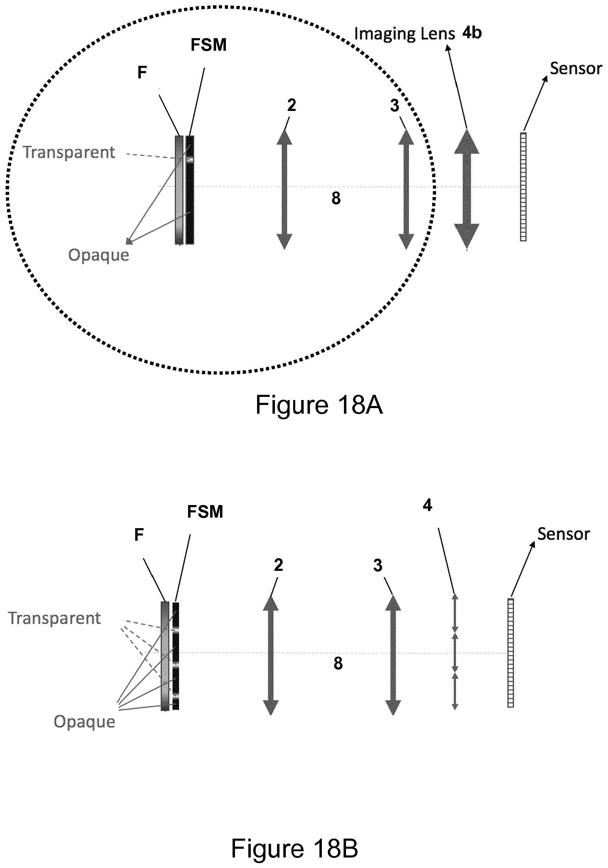

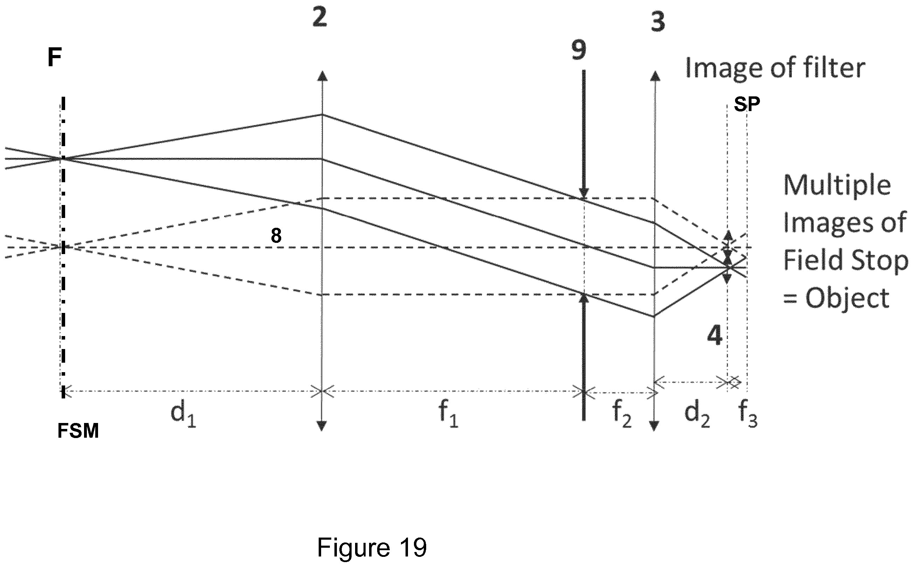

FIGURES 18A, 18B and 19 schematically shows an exemplary hyper or multi-spectral optical system according to the present invention.

Herein, identical reference numerals are used, where possible, to designate identical elements that are common to the figures.

## DETAILED DESCRIPTION OF THE SEVERAL EMBODIMENTS

The optical system according to one aspect of the present disclosure includes at least one optical projection element 2, an optical filter F, a first aperture array 4 comprising a plurality of aperture elements and a second aperture array S comprising a plurality of aperture elements.

The optical filter F is configured to filter the same wavelength, intensity or polarization along a constant filtering direction CFD (or axis defined by said direction) of the filter F. For example, for a spectral filter, the same wavelength (or substantially the same wavelength) is filtered by the filter along this direction of the filter F. This spectral filter may be for example a wedge shaped filter where the direction of constant thickness (or substantially constant thickness) defines the constant filtering direction.

Figures 1a and 1b shows a schematic illustration of the principle of operation of one comparative example of the optical system permitting the configuration A (Plenoptics 1.0 configuration) such as that illustrated in Figure 1g to be achieved.

Light rays from an object (smiley face) 1 pass through the aperture AP and the image of the object is projected onto aperture array 4. This projection is a 2D projection and can be an image projection x, y or it can be the Fourier projection theta, phi.

The filter F is, for example, placed at the aperture AP and is projected through each aperture element AE of the aperture array 4 (i.e. each aperture AE in the aperture array 4 acts as an aperture) onto the second aperture array S. This is repeated for each aperture AE resulting in a sampling as shown by reference number R, i.e. each part of the image is sampled through many filters.

The filter can be any filtering function, i.e. polarization, spectral or intensity. The filter is such that the filtering function varies in one or more directions and is constant in at least one direction (across the entire filter or solely a section of the filter), the other direction or directions being non-parallel to this constant filtering direction, for example, orthogonal.

In Figure 1c, a first lens L1 and a second lens L2 are included. Rays from the object 1 pass through the aperture AP and are projected using the first lens L1 onto the aperture array 4.

The filter F is placed at or close to the aperture AP and is projected using the second lens L2 through each aperture element of the aperture array 4 (that is, each aperture in the aperture array 4 acts as an aperture, the aperture array can be for example a pinhole or microlens array) onto the aperture array S.

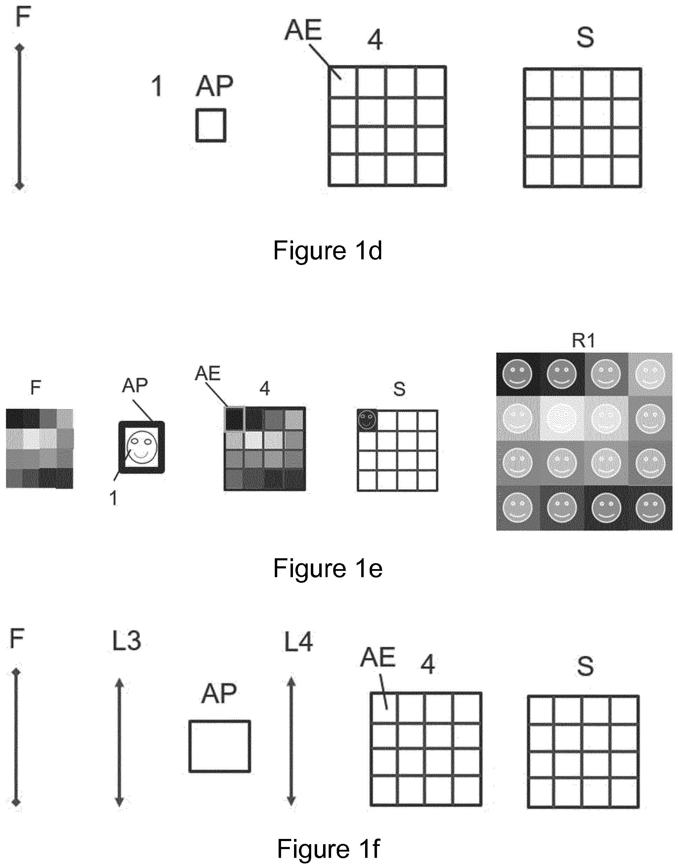

Figures 1d and 1e shows a schematic illustration of the principle of operation of another embodiment of the optical system permitting the configuration B such as that illustrated in Figure 1h to be achieved.

Light rays from the filter F pass through the aperture AP and the image of the filter F is projected onto aperture array 4. The rays from a projected object 1 pass through the aperture AP and a series of images is projected onto each aperture AE of aperture array 4.

Each image on each aperture AE in the aperture array 4 passes through the filter projected onto the aperture AE. Then on aperture array S the filtered object is projected. This is repeated for each aperture AE resulting in a sampling, as indicated by reference R1, as each of the multiple images of the object 1 pass through a different aperture which corresponds to a different filter.

With reference to Figure 1e, Rays from the filter F pass through the aperture AP and the image of the filter is projected onto aperture array 4. The projected object 1 is placed at the aperture AP and is projected through each aperture AE of the aperture array 4 (i.e. each aperture AE in the aperture array 4 acts as an aperture) onto the aperture array S. This is repeated for each aperture AE and the result is a sampling as in R1, i.e. one of each of the multiple images is passed through the filter.

In Figure 1f, a first lens L3 and a second lens L4 are included. The filter F is placed at or projected through aperture AP onto the aperture array 4 using a lens L3. An image of the object 1 is projected onto aperture AP of the aperture array 4 (this projection is a 2D projection and can be an image projection x, y or it can be the Fourier projection theta, phi) using a lens L3, and is projected using a lens L4 through each aperture AE of the aperture array 4 (i.e. each aperture in the aperture array acts as an aperture) onto the aperture array S.

The first aperture array 4 comprises a plurality of aperture elements as schematically shown in Figure 1i where a portion of an exemplary array 4 defining a square or rectangular matrix of aperture elements is shown. The aperture elements can be, for example, lenses, microlens or pinholes.

A location of an aperture element or each aperture element on the first aperture array 4 is defined by a first basis vector $\alpha_1$ and a second basis vector $\alpha_2$. The basis vectors extend in the 2D plane defined by the aperture array 4.

The basis vector magnitude defines, for example, a distance between two aperture elements, for instance, the distance from the geometrical center of one aperture element to the geometrical center of a neighboring aperture element, for example, the nearest neighbor aperture element. The basis vector magnitude may define, for example, the width or diameter of an aperture element ((see Figures 1i and 1j) in the plane of the array 4.

As illustrated in the exemplary embodiments of Figures 1i and 1j, the first basis vector $\alpha_1$ extends in a first direction aligning a plurality of aperture elements and the second basis vector $\alpha_2$ extends in a second different direction also aligning a plurality of aperture elements. For example, the basis vector direction aligns the geometrical center of the plurality of aperture elements.

Figure 1j shows an exemplary array defining a hexagonal matrix of aperture elements as well as the first and second basis vectors.

The first basis vector $\alpha_1$ and the second basis vector $\alpha_2$ are preferably set to be orthogonal in the case where the first aperture array 4 defines a square or rectangular matrix of aperture elements as shown in Figure 1i.

In the hexagonal array 4 of Figure 1j, the basis vectors define an angle of (substantially) 60 degrees. The basis vectors positioned tail to tail (as shown in Figures 1i and 1j) define an angle of 90 degrees or less.

The second aperture array S comprises a plurality of aperture elements. The second aperture array may be, for example, an image sensor S where the aperture element is a pixel or plurality of pixels or another optical element configured to capture incoming light.

A location of an aperture element or each aperture element on the second aperture array S is defined by a third basis vector $\beta_1$ and a fourth basis vector $\beta_2$. The basis vectors extend in the 2D plane defined by the aperture array S.

Similar to the first aperture array, the basis vector magnitude defines, for example, a distance between two aperture elements, for instance, the distance from the geometrical center of one aperture element to the geometrical center of a neighboring aperture element, for example, the nearest neighbor aperture element. The basis vector magnitude may define, for example, the width or diameter ((see Figures 1i and 1j) of an aperture element in the plane of the array S.

The exemplary embodiments of Figures 1i and 1j similar represent the third basis vector $\beta_1$ extending in a first direction aligning a plurality of aperture elements and the fourth basis vector $\beta_2$ extending in a second different direction also aligning a plurality of aperture elements.

The first basis vector $\beta_1$ and the second basis vector $\beta_2$ are similarly preferably set to be orthogonal in the case where the first aperture array S defines a square or rectangular matrix of aperture elements as represented in Figure 1i.

The pair of basis vectors positioned tail to tail (as shown in Figures 1i and 1j) define for example an angle or angular range of 90 degrees or less.

The optical system according to one embodiment is configured to form a projection of the optical filter F on the first aperture array 4 as illustrated in Figure 1h. The optical projection element 2, the optical filter F and the first aperture array 4 are arranged along an optical axis 8 to form a projection of the optical filter F on the first aperture array 4. The constant filtering direction of the projection of the optical filter F is orientated at an angle relative to the first basis vector $\alpha_1$ direction (or an axis defined by the first basis vector $\alpha_1$ direction) and is orientated relative to the second basis vector $\alpha_2$ direction (or an axis defined by the second basis vector $\alpha_2$ direction), as illustrated in Figures 1i and 1j by the dashed lines. According to another embodiment, the optical filter can be placed in front the first aperture array 4 to produce the configuration of Figure 1h. The constant filtering direction of the optical filter F is orientated at an angle relative to the first basis vector $\alpha_1$ direction (or an axis defined by the first basis vector $\alpha_1$ direction) and is orientated relative to the second basis vector $\alpha_2$ direction (or an axis defined by the second basis vector $\alpha_2$ direction).

According to one aspect of the present disclosure, the first basis vector $\alpha_1$ and the second basis vector $\alpha_2$ placed tail to tail define an angular range AR in between the first basis vector $\alpha_1$ direction and the second basis vector $\alpha_2$ direction as shown in Figure 1i and 1j (AR being the smaller angular range of the two possible angular ranges defined by the basis vectors).

The constant filtering direction CFD of the filter F or the filter projection is aligned to an angle contained in this angular range AR and is aligned non-parallel to the first basis vector $\alpha_1$ direction and non-parallel to the second basis vector $\alpha_2$ direction. The constant filtering direction CFD of the filter F or the filter projection can be aligned to any angle in the 360° range except along a direction or axis defined by the basis vectors. The constant filtering direction CFD is non-parallel to the basis vector directions or axes defined along the basis vector directions.

The angular range AR includes all angles in between the axis defined by the basis vectors but excludes an orientation of the constant filtering direction parallel to the first basis vector $\alpha_1$ direction and also excludes an orientation of the constant filtering direction parallel to the second basis vector $\alpha_2$ direction. For example, the constant filtering direction CFD is, for instance, non-parallel to the optical axis 8 and rotated or orientated with respect to the plane defined by the array of apertures about the optical axis 8 or about a direction or axis parallel to the optical axis. For example, the CFD can rotate in a plane parallel or substantially parallel to the plane defined by the array of apertures.

Furthermore, the constant filtering direction of the at least one projection of the optical filter F can be orientated at the above mentioned angle A plus a positive integer multiple (1,2,3,4...) or negative integer multiple (-1,-2,-3,-4...) of the angle between the first basis vector $\alpha_1$ and the second basis vector $\alpha_2$ placed tail to tail.

In the exemplary embodiment of Figure 1i this angle is 90 degrees and in the exemplary embodiment of Figure 1j this angle is 60 degrees.

Figure 1i shows the angular range $AR''' = AR + 3 \times 90°$ where the positive integer = 3 and the angle between the first basis vector $\alpha_1$ and the second basis vector $\alpha_2$ placed tail to tail = 90°. Consequently, if for example the angle A in the angular range AR shown in Figure 1i is 45°, then the constant filtering direction CFD can be aligned to the angle of 45° or alternatively at 45°+1×90°=135°, or alternatively at 45°+2×90°=225° or alternatively at 45°+3×90°=315°. The same filtering or sampling improvement is obtained at each of these angles compared to an alignment parallel to one of the basis vectors.

According to another aspect of the present disclosure, the constant filtering direction of the filter projection or of the optical filter F is orientated at an angle A within an angular range AR1 (see Figures 1i and 1j).

The angular range AR1 is defined by a first angle $\theta_{max}$ and by a second angle $\theta_{min}$. The first angle $\theta_{max}$ is produced by the vector addition $\alpha_1 + \alpha_2$ of the first basis vector $\alpha_1$ and the second basis vector $\alpha_2$ (as shown in Figure 1L for a hexagonal array). The second angle $\theta_{min}$ is defined by $\tan^{-1}(\mathbf{a1/b1})$ where $\mathbf{a1}$ is half the magnitude of the vertical component $\alpha_{V2}$ of the second basis vector $\alpha_2$ (illustrated in Figure 1m) and $\mathbf{b1}$ is the magnitude of the first basis vector $\alpha_1$ multiplied by the total number N of aperture elements along the first basis vector $\alpha_1$ direction (N=4 in the example of Figure 1m). The vertical component can be defined for example as the component of the second basis vector $\alpha_2$ perpendicular to the first basis vector $\alpha_1$.

The angular range AR1 thus includes the angles in between the first angle $\theta_{max}$ and the second angle $\theta_{min}$ as well as the first angle $\theta_{max}$ and the second angle $\theta_{min}$.

The constant filtering direction is orientated at an angle A of the angular range AR1 or at this angle A plus a positive integer multiple (1,2,3,4...) or negative integer multiple (-1,-2,-3,-4...) of the angle between the first basis vector $\alpha_1$ and the second basis vector $\alpha_2$ placed tail to tail (as explained above in relation to range AR).

An angle A that is twice the second angle $\theta_{min}$ (or twice angle $\theta_{min}$ plus a positive integer multiple (1,2,3,4...) or negative integer multiple (-1,-2,-3,-4...) of the angle between the first basis vector $\alpha_1$ and the second basis vector $\alpha_2$) defines an angle at which the sampling by the filter is maximized. For, example, the angle at which the maximum number of different wavelengths can be simultaneously filtered.

The second angle $\theta_{min}$ defines the angle from which a significant improvement in filtering is obtained, this improvement increasing up to the first angle $\theta_{max}$. Beyond this first angle $\theta_{max}$ and moving angularly towards the second basis vector $\alpha_2$ the improvement in filtering reduces. The maximum number of different wavelengths that can be simultaneously filtered peaks at the first angle $\theta_{max}$ and is symmetric around the first angle $\theta_{max}$. The aperture array of Figure 1i provides a total of four peaks at four different angles while that of Figure 1j provides six peaks at six different angles. As the constant filtering direction is rotated from the first basis vector $\alpha_1$ direction towards the second basis vector $\alpha_2$, a first optimum orientation is at the first angle $\theta_{max}$ and continued rotation beyond the second basis vector $\alpha_2$ direction will allow a further optimum orientation angle to be found. These angles for Figure 1j are 30°, 30°+1×60°=90°, 30°+2×60°=150°, 30°+3×60°=210°, 30°+4×60°=270° and 30°+5×60°=330°.

Similarly, the constant filtering direction of the filter projection or of the optical filter F can be orientated at an angle A within an angular range AR1' (see Figure 1j).

The angular range AR1' is defined by the first angle $\theta_{max}$ and by a second angle $\theta 1_{min}$. The second angle $\theta 1_{min}$ is defined by $\tan^{-1}(\mathbf{a1/b1})$ where **a1** is half the magnitude of the vertical component $\alpha_{V1}$ of the first basis vector $\alpha_1$ and **b1** is the magnitude of the second basis vector $\alpha_2$ multiplied by the total number N of aperture elements along the second basis vector $\alpha_2$ direction. The vertical component can be defined for example as the component of the first basis vector $\alpha_1$ perpendicular to the second basis vector $\alpha_2$.

The angular range AR1' thus includes the angles in between the first angle $\theta_{max}$ and the second angle $\theta 1_{min}$ as well as the first angle $\theta_{max}$ and the second angle $\theta 1_{min}$. The angular range AR1' is a mirror image of the angular range AR about the first angle $\theta_{max}$ or the angular range AR1' and the angular range AR are symmetric about the first angle $\theta_{max}$.

The second angle $\theta 1_{min}$ is for example equal to the angle between the first basis vector $\alpha_1$ and the second basis vector $\alpha_2$ less the angle $\theta_{min}$.

An angle A that is equal to the angle between the first basis vector $\alpha_1$ and the second basis vector $\alpha_2$ less twice the second angle $\theta_{min}$ (or an angle A that is equal to the angle between the first basis vector $\alpha_1$ and the second basis vector $\alpha_2$ less twice the second angle $\theta_{min}$ plus a positive integer multiple (1,2,3,4...) or negative integer multiple (-1,-2,-3,-4...) of the angle between the first basis vector $\alpha_1$ and the second basis vector $\alpha_2$) defines a further angle at which the sampling by the filter is maximized. The constant filtering direction is orientated at an angle A of the angular range AR1' or at this angle A plus a positive integer multiple (1,2,3,4...) or negative integer multiple (-1,-2,-3,-4...) of the angle between the first basis vector $\alpha_1$ and the second basis vector $\alpha_2$ placed tail to tail (as explained above). Figure 1n shows further details concerning the determination of angle $\theta_{max}$ and angle $\theta_{min}$

According to another comparative example, not falling under the scope of the claims, the optical system is configured to form a multiple projections of the optical filter F on the second aperture array S as illustrated in Figure 1g where one projection is shown surrounded by a dotted frame at the top right of Figure 1g. The optical projection element 2, the optical filter F, the first aperture array 4 and the second aperture array S are arranged along the optical axis 8 to form multiple projections of the optical filter on the second aperture array S. The constant filtering direction of one projection (or sub-projection) of the optical filter F (shown surrounded by a dotted frame at the top right of Figure 1g) is orientated at an angle relative to an axis defined by the third basis vector $\beta_1$ direction and relative to an axis defined by the fourth basis vector $\beta_2$ direction. The constant filtering direction CFD is orientated with respect to the plane defined by the aperture elements of the first or second aperture array.

The constant filtering direction CFD can be orientated with respect to the second aperture array S at the same angle A and at an angle in the above mentioned angular ranges as defined above with respect to the first aperture array 4. For the sake of conciseness, the above description given with respect to the angle A and the first aperture array 4 is not repeated here but applies identically to the relation between the orientation of the constant filtering direction CFD and the second aperture array S described using the basis vector $\beta_1$ and the basis vector $\beta_2$.

Alternatively, the constant filtering direction of the projection of the optical filter F or of the filter F can be orientated at an angle A within the possible angular ranges each defined by (i) the angle $\theta_{max}$ and (ii) the angle $\theta_{min}$ + Y degree(s) where Y = a positive integer (1,2,3,4...) or by (i) the angle $\theta_{max}$ and (ii) the angle $\theta 1_{min}$ - Y degree(s) where Y = a positive integer (1,2,3,4...), or is orientated at said angle A plus a positive or negative integer multiple of the angle between the first basis vector $\alpha_1$ and the second basis vector $\alpha_2$ placed tail to tail or plus a positive or negative integer multiple of the angle between the third basis vector ($\beta_1$) and the fourth basis vector ($\beta_2$) placed tail to tail (as explained previously).

The angular range can thus be for example that defined by (i) the angle $\theta_{max}$ and (ii) the angle $\theta_{min}$ + 1 degree or by (i) the angle $\theta_{max}$ and (ii) the angle $\theta_{min}$ + 2 degrees etc. Similarly, the angular range can thus be for example that defined by (i) the angle $\theta_{max}$ and (ii) the angle $\theta 1_{min}$ - 1 degree or by (i) the angle $\theta_{max}$ and (ii) the angle $\theta 1_{min}$ - 2 degrees etc.

As mentioned previously, the optical filter F is configured to filter the same wavelength, intensity or polarization along a constant filtering direction CFD of the filter F. The filter includes at least one constant filtering direction. The constant filtering direction may fully extend across the entire filter or extend across only a portion of the filter. The optical filter F is configured to filter the same or substantially the same wavelength, intensity or polarization along a constant filtering direction CFD of the filter F.

For example, filtering varies (for instance continuously) along one or more directions (across the entire or solely a portion of the filter) non-parallel to the constant filtering direction.

The optical filter F is configured to filter the same or substantially the same wavelength, intensity or polarization over the width or diameter D (see for example Figures 1i and 1j) of at least one aperture element of the first or second aperture array.

In one embodiment, the optical projection element 2 is an objective lens 2, the second aperture array S is an image sensor S comprising a plurality of light sensing elements and the first aperture array 4 is an array 4 of image forming elements comprising a plurality of image forming elements. The optical system includes the at least one objective lens 2, the optical filter F, the array 4 of image forming elements, and the image sensor or detector S.

The optical filter F is positioned away from the image sensor S. The advantages of using a filter located away from the detector were previously outlined above.

The image sensor S (see for example Figure 9A) can define a plane and comprise a plurality of light sensing elements or pixels (or super-pixels) P extending in a vertical direction V and a plurality of light sensing elements or pixels P extending in a horizontal direction H, the horizontal direction H being perpendicular to the vertical direction V. The image sensor S is thus a 2D detector array.

Alternatively, the image sensor S comprises a plurality of light sensing elements or pixels (or super-pixels) P extending only in the vertical direction V or a plurality of light sensing elements or pixels P extending only in a horizontal direction H thus forming a 1D detector array.

The image sensor S is, for example, a CMOS device comprising a plurality of pixels each configured to individually capture incoming light or an active pixel sensor (APS) containing an array of pixel sensors each comprising for example a photodetector and amplifier.

The image forming elements of the array 4 contain, for example, a plurality of lenses, micro-lens or pinholes. The array 4 of image forming elements preferably contains a plurality of image forming elements extending in the vertical direction V and a plurality of image forming elements extending in the horizontal direction H when the image sensor S is a 2D array. The array 4 may for example have a layout identical to that of the pixels (or super-pixels) P of the image sensor S as shown in Figures 9A or 9C where P in such a case represent an imaging element such as a micro-lens or pinhole. Alternatively, the array 4 of image forming elements contains a plurality of image forming elements extending in the vertical direction V or a plurality of image forming elements extending in the horizontal direction H when the image sensor S is a 1D array.

The objective lens 2, the optical filter F, the array 4 of image forming elements and the image sensor S are arranged along an optical axis 8 so that each element of the array 4 forms an image of the optical filter F on the image sensor S (or at a sensor plane SP) and the lens 2 forms an image i1 of an object 1 on the image sensor S (or at a sensor plane SP). One comparative example, not falling under the scope of the claims, of such a set-up is shown in Figure 2.

Rays from the same position in object 1 space (equally dashed lines) form an image on the array 4. Each image forming element of the array 4 samples a certain part of the object space. The system can be built such that there is no overlap. Namely, the same part of the object is never seen by more than one element of the array 4. The filter F is imaged by each element of array 4 on the sensor plane SP. As shown in Figure 2, the filter F is in contact with the lens 2 or closely in front of the objective lens 2, and $f_4$ is the distance of the object 1 from the array 4.

This permits the configuration A such as that illustrated in Figure 1g to be achieved.

In the exemplary illustration of Figure 1g, a total of 16 reproductions F1... F16 of filter F is produced by an array 4 containing at least 16 elements (microlens) are shown. The filter F filters for example 4x4 different wavelengths schematically represented by 16 tiles in the dotted frame in the top right of figure 1g. Thus, each of 16 reproductions F1... F16 filters these same wavelengths. The image i1 of object 1 is also shown. The 16 reproductions F1... F16 of filter F is repeated in a pixel like manner so that each of the reproductions F1... F16 filter different parts of the imaged object i1 at the same filtering wavelengths. The filter F is represented schematically in Figure 1g for ease of understanding and further details of filter F are provided below.

According to another comparative example, not falling under the scope of the claims, the objective lens 2, the optical filter F, the array 4 of image forming elements and the image sensor S are arranged along the optical axis 8 so that the array 4 forms multiple images i1 (Figure 1h) of the object on the image sensor S (or at the sensor plane SP), and the objective lens 2, the optical filter F, the array 4 of image forming elements and the image sensor S are arranged along the optical axis 8 to form an image of the filter F on or across the image forming elements of array 4. One example of such a set-up is shown in Figure 3. The system is thus configured to form a real image of the filter on the array 4 of image forming elements to filter the multiple images i1 of the object 1.

The optical filter F can be (physically or materially) located at a position upstream (behind) from the objective lens 2 (as shown in figure 3 or can be in contact with the objective lens 2 so that the filter F is imaged by the objective 2 onto the array 4 of image forming elements (a real image of the filter is formed on the array 4). The object 1 is also located at a position upstream (behind) from the objective lens 2.

As shown in Figure 3, the filter F is (physically) located in object space behind (upstream relative to the light incident direction) the lens 2. $f_4$ is the distance of the object 1 from the array 4 and $f_3$ is the focal distance of the elements of the array 4.

Rays from the same position in object 1 space (equally dashed lines) form an image before the array 4 via lens 2 (behind (upstream relative to the light incident direction) the array 4). Each element of the array 4 images the object 1 onto the sensor plane SP thus forming multiple images of the object at the sensor plane. The filter F is imaged by the same lens 2 onto the elements of the array 4 forming a real image of the filter on the array 4.

The multiple images i1 can thus be filtered for example at different wavelengths given that the filter F has been imaged onto the imaging forming elements.

This permits the configuration B such as that illustrated in Figure 1h to be achieved.

In the exemplary illustration of Figure 1h, a total of 16 reproductions of image i1 of the object 1 produced by an array 4 containing at least 16 elements (microlens) are shown. The filter F filters for example 4x4 different wavelengths schematically represented by 16 tiles. The 16 reproductions of image i1 is repeated in a pixel like manner so that each of the reproductions of the imaged object i1 is for example filtered at different filtering wavelengths. The filter F is represented schematically in Figure 1h as tiles for ease of understanding and further details of filter F are provided below.

Alternatively, the optical filter F is placed along the optical axis 8 in front of (downstream), behind (upstream) or on the array 4 of image forming elements (not illustrated). In other words, the filter F is physically positioned in front of, behind or on the array 4 and not located behind lens 2 as shown in Figure 3. This equally permits configuration B of Figure 1h to be achieved. For optimal results, it is preferably to position the optical filter F as close to the array 4 as possible but this is not necessary.

The optical filter F of the optical system of all embodiments of the present disclosure can include a filtering section FS as illustrated for example in Figure 9B or 9D. The optical filter F can comprise only filtering section FS or may include filtering section FS (at least one) as well as other filters different or identical to filtering section FS.

The optical filter F can be, for example, configured to filter wavelengths in the visible or infra-red spectrum.

The filter F can be a spectral filter in the visible or infra-red spectrum, but alternatively a polarization filter or an intensity filter or any combination of these. The filter can thus be configured to simultaneously filter spectrally and in polarization.

The filter F can alternatively be an intensity filter or a polarization filter. The filter F could also be any combination of such filters.

An exemplary intensity filter is a neutral density filter but the present disclosure is not limited to such an intensity filter and generally concerns any intensity filter that modifies the light intensity which is for example modified identically or differently spatially across the filter, and/or modified identically or differently spectrally across the filter. Nevertheless, this filter contains at least one constant filtering direction CFD across which the light intensity filtering is constant or substantially constant.

An exemplary polarization filter is a waveplate or retarder but the present disclosure is not limited to such a polarization filter and generally concerns any polarization filter that modifies the light polarization direction which is for example modified identically or differently spatially across the filter, and/or modified identically or differently spectrally across the filter. Nevertheless, this filter contains at least one constant filtering direction CFD across which the polarization filtering is constant or substantially constant.

The optical filter F and filtering section FS define an incident surface area IA for receiving light to be filtered. The filtering section (FS) includes the constant filtering direction CFD that extends entirely or partially across the filtering section FS.

According to one embodiment, the filtering section FS is for example configured to continuously filter light across the incident surface area IA. The filtering section FS always filters light across the incident surface area IA.

That is, filtering occurs at each position on the incident surface area IA. There is no interruption in filtering at any position on the incident surface area IA. The filtering section FS does not contain borders or interruptions that interrupts the light filtering that are present for example in known mosaic construction filters.

In other words, if the filtering section FS is for example configured to filter in the visible spectrum and a collimated beam of white light producing a small spot size on the filter section FS was displaced across the incident surface area IA, then the incident white light would always undergo filtering by the filter section FS as the spot is displaced across the incident surface area IA.

The filtering section FS is configured to continuously filter light that is incident on and across the incident surface area IA along a direction D1 of the incident surface area IA as shown in Figure 9B.

The direction D1, for example, extends in or is parallel to the horizontal direction H in which the elements p of the image sensor S extend, as shown in Figure 9A.

The filtering section FS is configured to filter at the same wavelength or substantially the same wavelength) across the incident surface area IA along the direction D1 following the horizontal direction H.

That is, the filtering section FS is configured to continuously filter across the incident surface area IA along a horizontal direction H, and configured to continuously filter at the same wavelength across the incident surface area IA along the horizontal direction H, the horizontal direction H being defined as above or alternatively defined as being the direction perpendicular to the optical axis 8 and to the earth's gravitational force direction **g** acting on the filter F.

The spectral filtering can be constant in wavelength across the direction D1 of the filter section FS, or can be constant only at one distinct portion along the direction D1 or can be constant at a plurality of different portions of the filter section along the direction D1 (or can be any combination of these). The constant spectral filtering of wavelength can occur between positions **a** and **b** in Figure 9B which can be a few nanometers or tens of nanometers or more.

The filtering section FS can be further configured to continuously filter light that is incident on and across the incident surface area IA along directions D2 and/or D3 of the incident surface area IA as shown in Figure 9B. The direction D2 extends in or is parallel to the vertical direction V in which the elements p of the image sensor S extend, as shown in Figure 9A. The direction D3 extends in the diagonal direction at 45° to directions D1 and D2.

The filtering section FS is configured to filter at different wavelengths along the direction D2 following the vertical direction V and along the diagonal direction D3. The spectral filtering can be continuously varying in wavelength across the directions D2 and/or D3 of the filter section FS, or can vary only at one distinct portion along the directions D2 and/or D3 or can vary only at a plurality of different portions of the filter section along the directions D2 and/or D3 (or can be any combination of these). The change in spectral filtering wavelength can be gradual or abrupt.

It is noted that the direction D1 is not limited to the specific direction D1 illustrated in Figure 9B but is to be understood as any direction parallel to the illustrated direction D1 along the filter section FS. This is equally true for directions D2 and D3.

In another embodiment, the filtering section FS can be configured to continuously filter light, that is incident on and across the incident surface area IA, along all directions of the incident surface area IA that are non-parallel to the constant filtering direction of the filter F. The filtering section FS is configured to filter at different wavelengths along all non-parallel directions across the incident surface area. Spectral filtering can be continuously varying in wavelength across all non-parallel directions of the filter section FS, or can vary only at one distinct portion along one non-parallel direction or can vary only at a plurality of different portions of the filter section along a plurality of non-parallel directions (or can be any combination of these). The change in spectral filtering wavelength can also be gradual or abrupt.

Figure 10 shows an exemplary optical system including a filter F containing such a filtering section FS.

The filtering section FS can for example comprise one layer of optical material or a plurality of superposed optical layers. The layer (or layers) is a continuous layer defining the incident surface area IA.

The optical thickness of the filtering section can vary across the entire filtering section FS along the directions D2, D3 but is constant along the direction D1. Alternatively, the optical thickness of the filtering section can vary across only a portion or a plurality of different portions of the filtering section along the directions D2, D3 or along all directions. The optical thickness of the filtering section FS can vary across the filter continuously in a linear or non-linear manner, and/or vary according to a step-profile. This permits a large range of spectral filters to be constructed in which different wavelengths or the same wavelengths can be filtered at different spatial position along or across the filter directions D2 and/or D3.

The manufacturing of such a filter is advantageously less complex and cheaper and permits a hyper or multi-spectral optical system that is less complex and less expensive to be produced while still allowing filtering at multiple wavelengths and allowing the range of angles impinging on the filter to be small permitting accurate filtering.

Another embodiment relates to a linear graded filter as schematically shown for example in Figure 9D. The manufacturing of such a filter is advantageously less complex and cheaper.

In such a linear filter the filtered wavelength varies continuously with position in the vertical direction V. The wavelength filtered by the linear graded filter is constant along one axis, that is, along direction H. This is schematically shown in Figure 9D by a line BB and corresponds to the constant filtering direction CFD. The same wavelength (or substantially the same wavelength) is filtered in a direction across line BB. A different wavelength is filtered as one moves down the filter from i to ix. A line BB at each of the different positions i to ix filters the same wavelength in a direction across that line. In this example, only 9 different wavelengths i to ix can be filtered.

The number of usable wavelengths when this filter is used in a naturally aligned manner in a hyperspectral/mulitspectral system is generally limited.

Figure 9E shows an exemplary 9x9 array (NxN array where N=9) of parallel images i1 or 9x9 pixels or super-pixels P on the image sensor S. The linear graded filter F will reduce the potential number of filtered wavelengths to just 9, or in the generic case it reduces the range from $N^2$ to N. This is clearly illustrated in Figure 9E, where the filter F is aligned on top of the detector S. From Figure 9E, it can be understood that only 9 different wavelengths are filtered.

According to one aspect of the present disclosure, the multispectral or hyperspectral system includes such a filter F tilted around the optical axis 8 of the optical system to change the alignment between the constant filtering direction CFD of the filter F and either the matrix of pixels P of the image sensor S or the array 4 of imaging elements as illustrated for example in FIGURE 11. The preferred orientation angle A of the constant filtering direction CFD of the filter F with respect to the sensor S has been disclosed earlier in association with, for example, Figures 1i and 1j.

The CFD is rotated or orientated about the optical axis 8 (or about a direction or axis parallel to the optical axis). The CFD is rotated with respect to the plane defined by the array.

When tilted at an angle of 45 degrees as illustrated in FIGURE 12, assuming a square matrix NxN, the number of different filtered wavelengths becomes 2N-1. For the 9x9 array, a total of 17 different wavelength filters is possible. It is preferable that the filter F of Figure 12 has a surface area A that covers all diagonal rows of the image sensor S.

If the filter is tilted at an angle $\tan^{-1}(1/C)$, then all $C^2$ possible wavelength filters can be used where C is the number of images i1 (or imagelets generating imaging elements of array 4 i.e. 16 in Figure 1h) in an optical system arranged to produce configuration B of Figure 1hb, or C is the number of pixels of the image sensor S behind each imaging elements of array 4 in an optical system arranged to produce configuration A of Figure 1a.

The extension to a rectangular configuration N×M (where N≠M) is identical. The angle $\tan^{-1}(1/C)$ is the angle that gives maximum number of distinct central wavelengths for a linear graded filter.

It is to be noted that by wavelength it is meant central wavelength as the filtered wavelength may have a linewidth and thus other wavelengths around a central wavelength may be filtered but to a reduced extent to that of the central wavelength.

As illustrated in the exemplary optical system of Figure 11, the filtering section FS and filter F is orientated at an angle A about the optical axis 8 and orientated with respect to the image sensor S. The axis DC of constant optical thickness (corresponding to the constant filtering direction) of the filtering section FS is orientated at an angle A relative to the horizontal direction H or the horizontal axis of the image sensor S in which a plurality of light sensing elements or pixels/super-pixels P extend in the horizontal direction H or alternatively at an angle A to the direction H perpendicular to the optical axis 8 and to the earth's gravitational force direction **g** acting on the filter F.

The angle A can be varied to determine and maximize the number of filtered wavelengths as explained previously.

While Figure 11 shows one particular optical setup, it is to be understood that this tilted filter whether it be a spectral filter as described above, or an intensity filter or a polarization filter can be used in any optical system configured to implement configurations A or B of Figures 1g or 1h.

The filter section FS can be for example either linearly graded in the form for example of a Fabry-Perot Wedge W (such as shown in Figure 9F) or can be also be a matrix or assembly of discrete filters. For example, the optical thickness of the filtering section FS can vary across the filter according to a step-profile to produce such an assembly of discrete filters.

An exemplary linear graded filter is the Linear Variable Bandpass Filter for Hyperspectral Imaging (LF103252) from Delta Optical Thin Film. This has for example a 25mm × 25mm area size, with wavelength filtering in the range of 450nm to 850nm. The spectral width of a typical filtering peak of FWHM of 4% of the linewidth and with an out of band rejection being <0.01%. The filtering section FS can, as previously mentioned, be linearly or non-linearly graded.

The filter F can be for example formed from thin film coatings on glass substrates that can be patterned during deposition (in situ), or by using a photolithographic process over the coating to block the addition or subtraction of materials deposited on the substrate surface, e.g. Materion.

Figures 4 to 8 illustrate further comparative examples of optical systems of the present disclosure, not falling under the scope of the claims.

Figures 4 to 6 show an optical system configured to implement configuration A of Figure 1g.

The system comprises the objective lens 2, an imaging lens 3, an aperture stop 6 positioned between the objective lens 2 and the imaging lens 3, as well as the array 4 of image forming elements positioned between the imaging lens 3 and the image sensor S.

All elements are arranged along the optical axis 8. The image sensor S is not shown in Figures 4 to 6 for clarity reasons but is represented by the sensor plane SP.

The lens 2 has a focal distance $f_1$, the lens 3 has a focal distance $f_2$ while the imaging forming elements of array 4 have a focal distance $f_3$. $d_1$ is the object distance from objective lens 2 and $d_2$ is the image distance where

$$d_2 = \frac{f_2}{f_1}\left(f_1 + f_2 - \frac{f_2}{f_1}d_1\right)$$

and $d_1$ can range from 0 to $\dfrac{f_1}{f_2}(f_1 + f_2)$ while $d_2$ ranges from $\dfrac{f_2}{f_1}(f_1 + f_2)$ to 0.

The optical filter F is preferably located at or in the aperture stop 6 or in front of (downstream relative to the light incident direction) or behind (upstream relative to the light incident direction) the aperture stop 6 or (substantially) at the focal points $f_1$ and $f_2$ or in front of (downstream) or behind (upstream) the focal points $f_1$ and $f_2$ so that an object 1 is imaged using the objective lens 2 and the second lens 3 onto the array 4 of image forming elements.

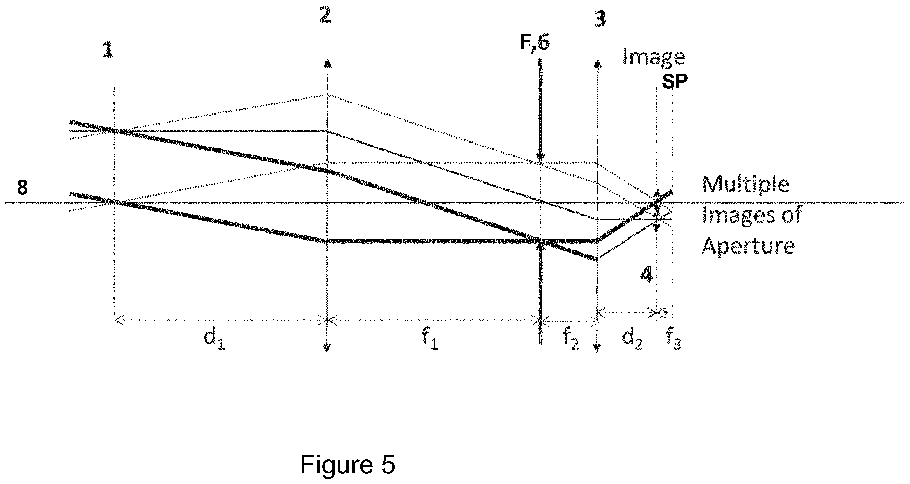

The array 4 of image forming elements is shown in the exemplary systems of Figures 4 and 5 located at the distance $d_2$ from the imaging lens 3 and at a distance $f_3$ from the sensor plane SP (sensor S). However, it is noted that this is not necessary for the system to function and the array 4 of image forming elements can be located about the distance $d_2$ from the imaging lens 3 and about the distance $f_3$ from the sensor plane SP (sensor S).

It is not necessary that the system of Figures 4 to 6 includes the aperture stop 6. In such a case the optical filter F and filtering section FS are located at or in front of (downstream) or behind (upstream) the focal point $f_1$ of the objective lens 2. The optical filter F is preferably also located at or in front of (downstream) or behind (upstream) the focal point $f_2$ of the lens 3.

The array 4 of image forming elements images the aperture stop 6 and/or filter F onto the image sensor S (sensor plane SP) to provide a plurality of images of the optical filter F and the filtering section FS at the image sensor S (sensor plane SP).

The aperture stop 6 is located (substantially) at or about the focal point $f_1$ of the objective lens 2 to control a distribution of light rays over a surface of the array 4 of image forming elements to control the perspective of the imaged object 1 allowing telecentric operation (telecentric in object space). The aperture stop 6 is also located behind the second lens 3 substantially at or about the focal point $f_2$ of the second lens 3 (telecentric in image space) to create a doubly telecentric system limiting light rays from the object 1.

The filter F is reimaged behind the array 4 to recreate configuration A (Figure 1g). As previously mentioned, this is known as the Levoy-Hostmeyer configuration or Plenoptics 1.0 configuration in terms of light field imaging. The goal of the system is to produce a super-pixel configuration as schematically shown in Figure 1g. As schematically shown in Figures 4 and 5, each part of an object 1 is imaged using lens 2 and lens 3 onto part of the array 4.

The array 4 images the aperture 6 and/or filter F onto the image sensor S. The filter F at the aperture stop 6 allows an identical array of images of the filter F to be made on the image sensor S. The aperture stop 6 limits the cross sectional area of the bundle of rays from the object 1 to the image point. Here the aperture stop 6 at the focal point of the lens 2 controls the distribution of rays over the surface of the elements of the array 4 for the purpose of controlling the perspective of the object 1 allowing a telecentric scheme.

Figure 4 schematically shows a Plenoptics 1.0 configuration or Levoy-Hostmeyer configuration used for hyperspectral imaging. The filter F is for example placed at the aperture 6. Rays from the same position in object space fill completely the aperture 6 and are imaged onto the array 4. Each element of array 4 samples a certain part of the object space. There is no overlap. The same part of the object is preferably never seen by more than one element of array 4.

Figure 5 schematically shows rays with the same angle in object space (e.g. bold lines) passing through the same point on the filter F or aperture 6 and each come to a focus with the same relative position behind the array 4. The image of the aperture 6 or filter F is made by lens 3. The array 4 makes an array of identical imagelets of the aperture plane and/or filter F.

As schematically shown in Figure 4, the system is made doubly telecentric (meaning the system is telecentric in both the object space and telecentric in the image space) by placing a small aperture stop 6 (an aperture stop limiting the rays incident on the array 4 to those that are substantially parallel to the optical axis 8) at the focal distance of the first lens 2 i.e. $f_1$ upstream of the object lens 2 and at the focal distance of the lens 3, i.e. $f_2$ downstream of the image lens 3, to limit the rays from object points of the object 1. The light goes through only a small (central) portion of the lens 3. As the filter F and/or aperture stop 6 are at the focal points of the first 2 and second 3 lenses ($f_1$ & $f_2$) the central ray of each bundle is parallel to the lens axis. If the object is moved nearer or further from the lens 2, this bundle still has its central ray parallel to the lens axis, and that ray reaches the same point of the image plane as it does for other positions of the object. Thus, the magnification of the image is constant with respect to object position.

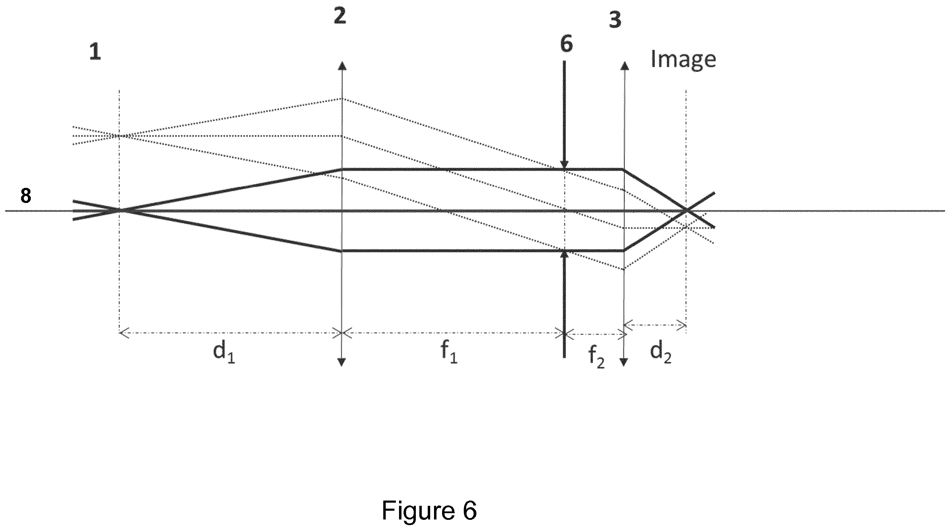

Figure 6 schematically shows a doubly telecentric system created using the aperture stop 6. A system telecentric only in image space of the filter F or doubly telecentric can be produced in other manners well known to a skilled person in the art.

The system of Figure 4 to 6 can alternatively be made telecentric by not including an aperture stop and instead including telecentric lenses for the object lens 2 or the image lens 3 or made doubly telecentric by including telecentric lenses for the object lens 2 and the image lens.

This is shown for example in Figure 13. Figure 13 shows system modeling in Zemax using a pair of achromatic lenses with long working distances. A preferred system includes long working Steinheil triplets at x2 magnification. The sensor size was 4.6mm (x2 magnification) and gave object of 9.2mm. The image of the filter is diffraction limited and the spot size is less than 2 microns, i.e. less than a pixel. The telecentric lenses are used in the object and image space to provide an orthographic projection producing the same magnification at all distances. Although an object 1 or image sensor S that is too close or too far from the lens may still be out-of-focus, the size of the resulting blurry image will remain (substantially) unchanged.

Figures 7 to 8 show another comparative example optical system configured to implement configuration B of Figure 1h.

The optical system includes the objective lens 2, a field stop 9, image lens 3, the array 4 of image forming elements and the image sensor S.

This optical system is also configured to form a real image of the filter F on the array 4 of image forming elements to filter the multiple images i1 of the object 1.

The field stop 9 is positioned between the objective lens 2 and the imaging lens 3, and the array 4 of image forming elements is positioned between the imaging lens 3 and the image sensor S.

All elements are arranged along the optical axis 8. The image sensor S is not shown for clarity reasons but is represented by the sensor plane SP.

The lens 2 has a focal distance $f_1$, the lens 3 has a focal distance $f_2$ while the imaging forming elements of array 4 have a focal distance $f_3$. $d_1$ is the object distance from objective lens 2 and $d_2$ is the image distance where

$$d_2 = \frac{f_2}{f_1}\left(f_1 + f_2 - \frac{f_2}{f_1}d_1\right)$$

and $d_1$ can range from 0 to $\dfrac{f_1}{f_2}(f_1 + f_2)$ while $d_2$

ranges from $\dfrac{f_2}{f_1}(f_1 + f_2)$ to 0.

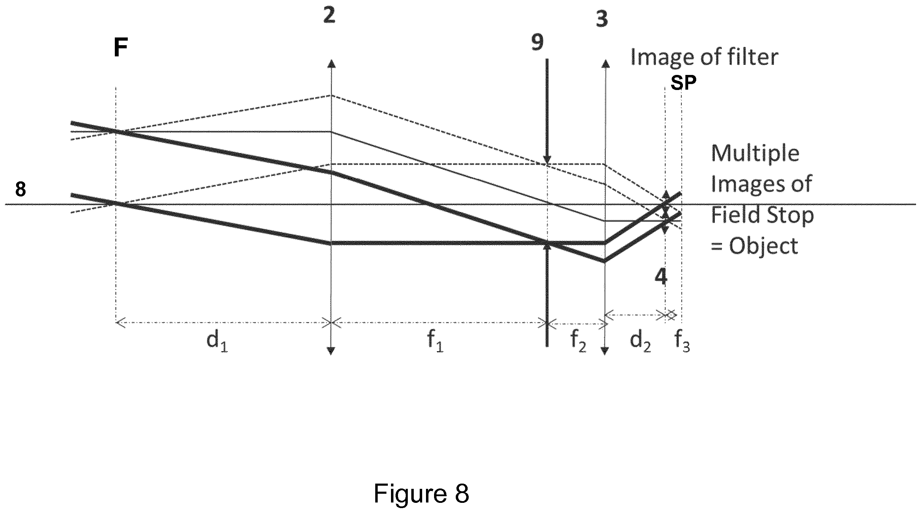

The optical filter F can be (physically or materially) located at a position upstream (behind) from the objective lens 2 (as shown in Figures 7 and 8) or can be in contact with the objective lens 2 so that the filter F is imaged by the objective 2 and image lens 3 onto the array 4 of image forming elements (a real image of the filter is formed on the array 4). The object 1 (not shown) is also located at a position upstream (behind) from the objective lens 2.

The array 4 images an object 1 at a position upstream (behind) from the objective lens 2 onto the image sensor S (sensor plane SP) to provide a plurality of images i1 (Figure 1h) of the object 1 at the image sensor S (sensor plane SP). The object 1 is not shown in Figures 7 and 8 for clarity reasons.

The optical filter F can alternatively be located downstream (in front of) from the array 4 between the array 4 and the sensor S, or upstream (behind) from the array 4 between the array 4 and the lens 3.

The optical filter F can alternatively be located on the array 4 of image forming elements.

The array 4 of image forming elements is shown in the exemplary systems of Figures 7 and 8 located at the distance $d_2$ from the imaging lens 3 and at a distance $f_3$ from the sensor plane SP (sensor S). However, it is noted that this is not necessary for the system to function and the array 4 of image forming elements can be located about the distance $d_2$ from the imaging lens 3 and about the distance $f_3$ from the sensor plane SP (sensor S).

The field stop 9 is located (substantially) at or about the focal point $f_1$ of the objective lens 2 to control a distribution of light rays over a surface of the array 4 of image forming elements to control the perspective of the imaged object 1 allowing telecentric operation (telecentric in object space). The stop 9 is also located behind the second lens 3 substantially at or about the focal point $f_2$ of the second lens 3 (telecentric in image space) to create a doubly telecentric system limiting light rays from the object 1. This allows a doubly telecentric system to be created.

The optical system is telecentric with respect to the filter F and the image of the filter. The system is Afocal.

It is, however, not necessary that the system include the field stop 9. A system telecentric only in image space of the filter F or doubly telecentric can be produced in other manners well known to a skilled person in the art.

As mentioned above, the goal of this system of Figures 7 and 8 is to produce multiple images i1 of the object 1 as schematically shown in Figure 1h. The array 4 is used to form multiple parallel images i1, and the filter F and filtering section FS is either placed just behind or in front of the microlens array 4 or on the array 4.

Alternatively, the filter F and filtering section FS is imaged onto the microlens array 4 as schematically shown in Figures 7 and 8. The filter F or a real image of the filter F is placed in the object space upstream from the lens 2, and the filter F or the real image of the filter F is imaged using lens 2 and lens 3 onto the array 4 as shown in the example of Figures 7 and 8.

Figure 7 schematically shows a configuration to produce the multiple images i1 of the object 1 as schematically shown in Figure 1h. The filter F is placed at the telecentric object position with respect to the lens 2 and lens 3. Rays from the same position at the filter F, e.g. solid lines, fill completely the field stop 9 and are imaged onto the array 4. Each element of the array 4 samples a certain part of the filter F. The same part of filter F is preferably never seen by more than one element of the array 4. Figure 8 also shows the filter F placed at the telecentric object position with respect to lens 2 and lens 3. Rays from an object with the same angle in object space (e.g. bold line of Figure 8) pass through the same point of the field stop 9 and each come to a focus with the same relative position behind array 4 and at the sensor plane SP creating a series of identical imagelets i1 of the object 1.

The system of Figures 7 and 8 can alternatively be made telecentric by not including the field stop 9 and instead including telecentric lenses for the object lens 2 or the image lens 3 or made doubly telecentric by including telecentric lenses for the object lens 2 and the image lens. Although an object 1 or image sensor S that is too close or too far from the lens may still be out-of-focus, the size of the resulting blurry images i1 will remain (substantially) unchanged. In any of the above described embodiments, the filter F can be physically located at the described positions of these optical systems. However, instead of physically placing the filter F in the system, a real image of the filter F can be used and located at the described positions of these optical systems.

Means for generating the real optical filter image and positioning the real optical filter image in the system is used in such a case. Such means include a converging lenses (a concave mirror can also be used.), as long as the filter is placed further away from the lens (mirror) than its focal point then a real inverted image will be formed.

The array 4 of image forming elements and/or the objective lens 2 in any of the above described embodiments can be mounted in the system, for example on a translational mount or stage, to be mobile along the optical axis 8 to allow the spatial resolution of the optical system to be increased.

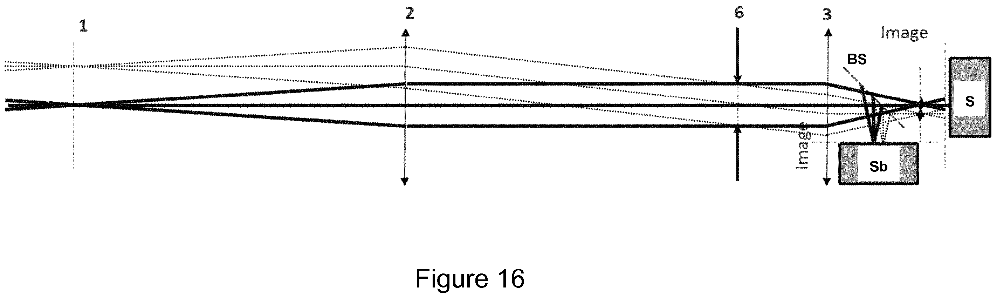

As shown schematically in Figures 16 to 18, the optical system of Figures 4 to 6 may include a beam-splitter BS to increase spatial resolution. Depending on the position of the beam-splitter BS in the system a third lens 3b and a second sensor Sb may be required as shown in Figures 16 to 18.

In Figure 15, the beam-splitter BS is located between the objective lens 2 and the image lens 3 and a third lens 3b is arranged to image unfiltered incident light onto a second image sensor Sb. The beam-splitter is before filter F and the signal is unfiltered (therefore larger). A 10:1 splitter can for example be used.

In Figure 16, the beam-splitter BS is located between the objective lens 2 and the array 4 of image forming elements and a third lens 3b is arranged to image filtered incident light onto a second image sensor Sb. As the beam-splitter is after the lens 3 the signal is filtered. This gives a summed transmission of the filter and useful information. Advantageously, no additional optical elements except the beam-splitter is required.

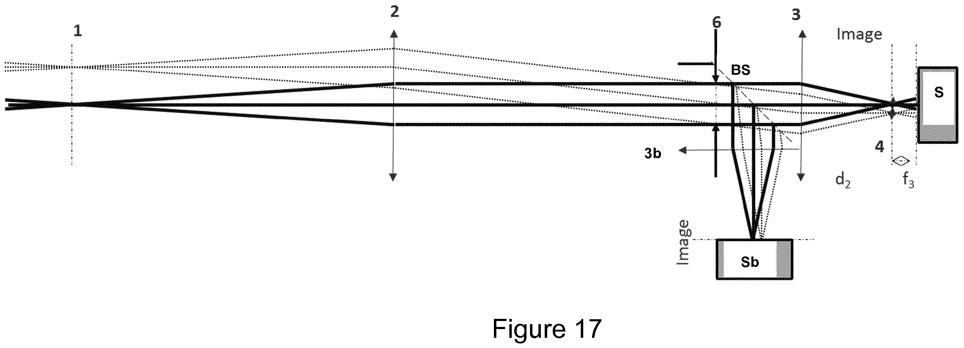

In Figure 17, the beam-splitter BS is located between the filter F and the image lens 3 and a third lens 3b is arranged to image filtered incident light onto a second image sensor Sb. The beam-splitter BS is after the filter and thus the signal is filtered. This gives a summed transmission of the filter and useful information.

Although only shown with respect to the optical system of Figures 4 to 6, the beam-splitter BS and associated elements can also be used in the optical system of Figures 7 and 8 in the manner illustrated in Figures 4 to 6.

The inclusion of a beam-splitter in the optical system advantageously provides image enhancement and permits a higher spatial resolution to be obtained. A tradeoff exists between spatial and spectral resolution but the inclusion of a beam-splitter for a given spatial resolution can allow one to have a larger number of spectral channels compared to the case without a beam-splitter.

According to the present invention, an optical system is provided for obtaining multi-/hyper-spectral hypercube measurements of an object.

That is, the present invention concerns an optical system as described previously that permits the configuration B (such as that illustrated in Figure 1h) to be achieved, wherein the optical system further includes a filter selection means FSM (or a filter selector) for selecting filtered electromagnetic radiation that is to be provided to the aperture array 4.

Exemplary embodiments are shown schematically in Figures 18A, 18B and 19. It is however noted that the optical system is not to be limited to the embodiments shown in Figures 18A, 18B and 19 but concerns any one of the embodiments described or illustrated in this disclosure in relation to an optical system permitting configuration B (such as that illustrated in Figure 1h) to be achieved.

The optical system according to this aspect of the present disclosure, may include an imaging lens 4b instead of the aperture array 4. Moreover, while the optical system can include the filter F as previously described in the present disclosure, the optical system can alternatively include any optical filter F and does not necessarily have to include the filter F as previously described in the present disclosure containing for example a constant filtering direction. The optical filter can be, for example, a mosaic filter including a plurality of individual optical filters. The optical filter F can be configured to filter a plurality of wavelengths. Each individual optical filter of the mosaic filter can thus be, for example, configured to filter at a different wavelength.

The optical system can include at least one objective lens 2, an optical filter F, and an imaging lens 4b or the first aperture array 4 comprising a plurality of aperture elements such as image forming elements, for example, lenses, micro-lenses or pinholes.

The objective lens 2, the optical filter F, and the imaging lens 4b or first aperture array 4 are arranged along the optical axis 8 to form at least one projection or image of the optical filter F on the imaging lens 4b (For example, Figure 18B) or on the first aperture array 4 (for example, Figure 18B).

As previously explained in relation the configuration B, the projection or image of the filter F on the first aperture array 4 permits an object 1 (such as object i1 in Figure 1h) to be simultaneously filtered at, for example, multiple wavelengths.

The object 1 is, for example, integrally (or wholly) and multiply replicated. The filter F is, for example, replicated once to filter each of the multiple integral or whole objects replications (for example, 16 whole object replications in Figure 1h filtered by one filter image).

The projection or imaging has, for example, the same effect as if the filter F was physically placed in contact with the first aperture array 4.

For example, with respect to the exemplary 4x4 filter illustrated in Figure 1h, the projection or image of this filter on the first aperture array 4 permits to simultaneously filter at 4x4 multiple or different wavelengths.

The optical system further includes filter selection means FSM that selects the filtered electromagnetic radiation that is to be provided to the imaging lens 4b or the aperture array 4.

The filter selection means FSM is configured to select the part of the filter F that will or that has already filtered light and this selected filtered light is imaged or projected by the system to or onto the imaging lens 4b or the first aperture array 4.

The filter selection means FSM can be located downstream from the filter (F), or can be located upstream from the filter (F).

The filter selection means FSM is configured to spatially select areas or zones of the filter F from which filtered light is received by the filter selection means FSM and passed through the filter selection means FSM (FSM downstream with respect to the filter F), or to spatially select areas or zones of the filter F to which light is then provided by the filter selection means FSM to the filter F and passed through the filter selection means FSM to be filtered by the filter F (FSM upstream with respect to the Filter F).

The filter selection means FSM may contact directly or indirectly the filter F. The filter selection means FSM can be attached directly or indirectly to the filter, but may also not be attached to the filter selection means FSM.

The imaging lens 4b is arranged in the optical system to form one projection of an object 1 on a second aperture array S or a second aperture array plane SP. The second aperture array S includes or is, for example, an image sensor S comprising a plurality of light sensing elements as previously mentioned above in the present disclosure.

The first aperture array 4 is arranged in the optical system to form a plurality of projections (imagelets) of the object 1 on the second aperture array S or the second aperture array plane SP. Multiple optical images are formed at the sensor plane SP or on the sensor S allowing multiple optical images to be captured simultaneously at the sensor plane SP.

The object 1 is located at a position upstream (behind) from the objective lens 2 but is not shown in the exemplary figures 18A, 18B and 19 for clarity reasons. Light from the object 1 for example passes through the filter and the FSM to be imaged or projected by the imaging lens 4b or the first aperture array 4 onto the sensor array S or sensor plane.

As mentioned, the filter selection means FSM is configured to select a filtering zone or filtering zones of the filter F to select the filtered electromagnetic radiation to be provided to the imaging lens 4b or the first aperture array 4.

The filter selection means FSM can comprise a plurality of addressable areas configured to allow or block electromagnetic radiation through these areas to respectively allow or block electromagnetic radiation through the filter selection means FSM, from one side to the other.

The filter selection means FSM is, for example, configured to define at least one or a plurality of different patterns through which the electromagnetic radiation passes. The filter selection means FSM is, for example, configured to define a transparent band through which the electromagnetic radiation passes, and configured to define opaque areas or zones around the transparent band blocking the transmission of electromagnetic radiation. Only the transparent band allows electromagnetic radiation to pass through to the imaging lens 4b or the first aperture array 4.

The filter selection means FSM is configured for example to displace or sweep the transparent band to permit spectrum sweeping or to carry-out a push-broom scan.

The filter selection means FSM can be or comprise a spatial light modulator, for example, a liquid crystal spatial light modulator. The filter selection means FSM could alternatively be or comprise a Digital micro-mirror device (DMD).

The filter selection means FSM can comprise or consist solely of an electronically addressable optical device (or liquid crystal device) comprising a liquid crystal and a plurality of electronically addressable zones, areas or pixels containing the liquid crystal material. The device is configured to use the light-modulating properties of a liquid crystal to transmit or not transmit light through the device at each addressable zone, area or pixel of the device.

The filter selection means FSM can for example comprise or consist solely of a liquid crystal device or liquid crystal spatial light modulator LCD.

The liquid crystal device LCD can be, for example, attached to the filter F (such as a linear variable spectral filter) and directly or indirectly be in contact with the filter. The liquid crystal device LCD can be attached in an upstream position or alternatively attached in a downstream position as shown for example in Figures 18A and 18B.

Addressing different zones or areas or pixels on the liquid crystal device LCD to render them transparent (or at least partially transparent) or non-transparent (or at least partially non-transparent) allows one to change the pattern of transparent light on the liquid crystal device LCD permitting to choose the active part of the filter F and to choose the light provided by that part of the filter F for subsequent use.

Figure 19 shows for example the optical system of Figure 7 that further includes the filter selection means FSM. This same modification can be carried out to any one of the previously described embodiments concerning configuration B. As previously mentioned, the array 4 can be replaced by imaging lens 4b and the filter F is not limited to the filter previously described herein.

The system can be telecentric in image space and/or in object space. This can be achieved in the manner set out above in relation to configuration B.

For example. the objective lens 2 and/or the second lens 3 are telecentric lenses. A doubly telecentric lens system can be used to image the filter F - LCD pair onto the lens 4b or array 4 as illustrated, for example, in Figures 18A and 18B.

The whole frontend is equivalent of a colored lens with, for example, a color band equal to the integration of the filter F over the active part of the liquid crystal device LCD.

Thus, by imaging an object 1 while there are different patterns on the liquid crystal device LCD, a multi-/hyper-spectral hypercube measurement of the object 1 is achieved and obtained.

For example, if one puts a clear line on the liquid crystal device LCD aligned with the spectral bands of the filter F and set the liquid crystal device LCD opaque everywhere else, then by sweeping this clear line along the liquid crystal device LCD, one obtains a push-broom hyperspectral camera or system. However, in contrast with the existing push-broom cameras or systems, there is no mechanically moving part. The advantages of such a push-broom camera is a system or camera providing high spatial and spectral resolution but without having the disadvantage of having a moving part. Also, since lots of different patterns can be mapped on the liquid crystal device LCD, one can perform multiple different measurements (not only simple spectrum sweeping) which results in more accurate and less noisy hypercube acquisition.

By using a microlens array 4 (see for example, Figure 18B) instead of the single imaging lens 4b (see for example Figure 18A), one obtains a combination of a push-broom camera and a snapshot camera. With this system, one advantagely obtain tens or hundreds of bands at each time of imaging. Thus, the total time of sweeping the entire spectrum divides by tens or hundreds. The combination of the push-broom and snapshot hyperspectral cameras thus gives the possibility to compromise between the advantages of these two types of cameras. Like push-broom cameras, one obtains high resolution in the spectral domain and like snapshot cameras one can trade speed with spatial resolution. Also, when one fixes the pattern on the liquid crystal device or LCD, this camera provides a snapshot hyper-/multi-spectral camera which has programmable bands.

The optical system described above can be provided as an add-on to an existing camera (cell phone, smart phone, camera, ...) to turn the exiting camera into a hyperspectral camera. In such a case, the add-on optical system preferably does not include the imaging lens 4b and/or the sensor array S and only, for example, the encircled part shown in Figure 18A may be provided.

While the invention has been disclosed with reference to certain preferred embodiments, numerous modifications, alterations, and changes to the described embodiments, are possible without departing from the sphere and scope of the invention. Accordingly, it is intended that the invention not be limited to the described embodiments, and be given the broadest reasonable interpretation in accordance with the language of the appended claims.

**Claims**

1. An optical system including:

   - at least one objective lens (2);
   - an optical filter (F); and
   - an imaging lens (4b), or a first aperture array (4) comprising a plurality of aperture elements;

   and wherein the at least one objective lens (2), the optical filter (F), and the imaging lens (4b) or first aperture array (4) are arranged along an optical axis (8) to form at least one projection of the optical filter (F) on the imaging lens (4b) or on the first aperture array (4), **characterized in that** the optical system further includes a filter selection means (FSM) for selecting filtered electromagnetic radiation to be provided to the imaging lens (4b) or the first aperture array (4); and **in that** the at least one objective lens (2) is located at a position upstream from the first aperture array (4) or the imaging lens (4b) and the optical filter (F) and the filter selection means (FSM) are located at a position upstream from the at least one objective lens (2) so that the first aperture array (4) or the imaging lens (4b) images an object (1) located upstream of the objective lens (2) onto an image sensor plane (SP) to provide at least one or a plurality of images of the object (1) at the image sensor plane (SP) and so that the optical filter (F) is imaged by the objective lens (2) onto at least a part of the first aperture array (4) or the imaging lens (4b) to filter the at least one or the plurality of images of the object (1) as if the optical filter (F) was physically placed in contact with the first aperture array (4) or the imaging lens (4b).

2. System according to any one of the previous claims, wherein the filter selection means (FSM) is configured to select a filtering zone or filtering zones of the filter (F) to select the filtered electromagnetic radiation to be provided to the imaging lens (4b) or the first aperture array (4); or

   wherein the filter selection means (FSM) comprises a plurality of addressable areas configured to allow or block electromagnetic radiation through said areas to respectively allow or block electromagnetic radiation through the filter selection means; or
   wherein the filter selection means (FSM) is configured to define at least one or a plurality of patterns through which the electromagnetic radiation passes; or
   wherein the filter selection means (FSM) is configured to define a transparent band through which the electromagnetic radiation passes, and configured to define opaque areas or zones around the transparent band blocking the transmission of electromagnetic radiation such that only the transparent band allows electromagnetic radiation to pass through to the imaging lens (4b) or the first aperture array (4).

3. System according to claim 2, wherein the filter selection means (FSM) is configured to displace or sweep the transparent band to permit spectrum sweeping, or wherein the filter selection means (FSM) is configured to displace or sweep the transparent band to carry-out a push-broom scan.

4. System according to any one of the previous claims, wherein the filter selection means (FSM) comprises or consists solely of an electronically addressable optical device comprising a liquid crystal and a plurality of electronically addressable zones, areas or pixels containing liquid crystal material; or wherein the filter selection means (FSM) comprises or consists solely of a spatial light modulator, a liquid crystal device (LCD), or a Digital micro-mirror device (DMD).

5. System according to any one of the previous claims, wherein the optical system includes the first aperture array (4) and the first aperture array (4) includes an array (4) of image forming elements comprising a plurality of lenses, micro-lenses or pinholes; and wherein the first aperture array (4) is arranged in the optical system to form a plurality of whole or integral replications of an object (1) on a sensor plane (SP) or a sensor (S); and wherein the filter (F) is imaged to form the at least one projection of the filter (F) on the first aperture array (4) to filter the plurality of object (1) replications.

6. System according to any one of the previous claims, wherein the optical filter (F) comprises or is a mosaic filter including a plurality of individual optical filters.

7. System according to any one of the previous claims 1 to 5, wherein the optical filter (F) is configured to filter the same wavelength along a constant filtering direction (CFD) of the filter (F).

8. System according to the previous claim, wherein the optical filter (F) includes a filtering section (FS), the filtering section (FS) defining an incident surface area (IA), the filtering section (FS) including the constant filtering direction (CFD) and being further configured to continuously filter at different wavelengths along a direction of the incident surface area (IA) following a vertical direction to the constant filtering direction.

9. System according to any one of the previous claims 7 to 8, wherein a filtering section (FS) is further configured to continuously filter at different wavelengths along any direction or all directions non-parallel to the constant filtering direction (CFD) across the incident surface area (IA).

10. System according to any one of previous claims, wherein the system comprises the objective lens (2), a second lens (3), and the array (4) of image forming elements or the imaging lens (4b) respectively arranged along the optical axis (8), wherein the optical filter (F) and the filter selection means (FSM) are located at a position upstream from the objective lens (2) so that the filter (F) is imaged by the objective (2) and the second lens (3) onto at least a part of the array (4) of image forming elements or the imaging lens (4b); and the array (4) of image forming elements or the imaging lens (4b) images an object (1) onto an image sensor plane (SP) to provide at least one or a plurality of images of the object (1) at the image sensor plane (SP).

11. System according to any one of previous claims 1 to 9, wherein the system comprises the objective lens (2), a field stop (9), a second lens (3) and the array (4) of image forming elements or the imaging lens (4b) respectively arranged along the optical axis (8), wherein the optical filter (F) and the filter selection means (FSM) are located at a position upstream from the objective lens (2) or with the filter (F) in contact with the objective lens (2) so that the filter (F) is imaged by the objective (2) and second lens (3) onto at least a part of the array (4) of image forming elements or the imaging lens (4b); and the array (4) of image forming elements or the imaging lens (4b) images an object (1) onto an image sensor plane (SP) to provide a plurality of images of the object (1) at the image sensor plane (SP).

12. System according to any one of the previous claims, wherein the system is a telecentric in image space and/or in object space; or
wherein the array (4) of image forming elements and/or the objective lens (2) are mounted to be mobile along the optical axis (8) to allow the spatial resolution of the optical system to be increased.

13. Device including the optical system according to any one of the previous claims, wherein the device is a telephone or smart phone, or
system including a smart phone and the optical system according to any one of the previous claims provided as an add-on device for the smart phone.

**Patentansprüche**

1. Optisches System, das enthält:

   - mindestens eine Objektivlinse (2);
   - einen optischen Filter (F); und
   - eine Bildgebungslinse (4b) oder eine erste Blendenanordnung (4) umfassend mehrere Blendenelemente; und wobei die mindestens eine Objektivlinse (2), der optische Filter (F) und die Bildgebungslinse (4b) oder eine erste Blendenanordnung (4) entlang einer optischen Achse (8) angeordnet sind zum Bilden mindestens einer Projektion des optischen Filters (F) auf die Bildgebungslinse (4b) oder auf die erste Blendenanordnung (4),

   **dadurch gekennzeichnet, dass** das optische System weiter ein Filterauswahlmittel (FSM) zum Wählen gefilterter elektromagnetischer Strahlung zur Lieferung an die Bildgebungslinse (4b) oder die erste Blendenanordnung (4) enthält und dass die mindestens eine Objektivlinse (2) sich an einer Position stromaufwärts von der ersten Blendenanordnung (4) befindet oder die Bildgebungslinse (4b) und der optische Filter (F) und das Filterauswahlmittel (FSM) an einer Position stromaufwärts von der mindestens einen Objektivlinse (2) angeordnet sind, sodass die erste Blendenanordnung (4) oder die Bildgebungslinse (4b) ein Objekt (1), das sich stromaufwärts von der Objektivlinse (2) befindet, auf eine Bildsensorebene (SP) abbildet, um mindestens ein Bild oder mehrere Bilder des Objekts (1) auf der Bildsensorebene (SP) bereitzustellen und so, dass der optische Filter (F) durch die Objektivlinse (2) auf mindestens einen Teil der ersten Blendenanordnung (4) oder die Bildgebungslinse (4b) abgebildet wird zum Filtern des mindestens einen Bilds oder der mehreren Bilder des Objekts (1), als ob der optische Filter (F) physisch in Kontakt mit der ersten Blendenanordnung (4) oder der Bildgebungslinse (4b) platziert wäre.

2. System nach einem der vorhergehenden Ansprüche, wobei das Filterauswahlmittel (FSM) konfiguriert ist zum Wählen einer Filterungszone oder von Filterungszonen des Filters (F) zum Wählen der gefilterten elektromagnetischen Strahlung zur Lieferung an die Bildgebungslinse (4b) oder die erste Blendenanordnung (4); oder

   wobei das Filterauswahlmittel (FSM) mehrere adressierbare Bereiche umfasst, die konfiguriert sind zum Gestatten oder Blockieren von elektromagnetischer Strahlung durch die Bereiche zum jeweiligen Gestatten oder Blockieren von elektromagnetischer Strahlung durch das Filterauswahlmittel; oder
   wobei das Filterauswahlmittel (FSM) konfiguriert ist zum Definieren von mindestens einem Muster oder mehreren Mustern, durch die die elektromagnetische Strahlung hindurchtritt; oder
   wobei das Filterauswahlmittel (FSM) konfiguriert ist zum Definieren eines transparenten Bandes, durch das die elektromagnetische Strahlung hindurchtritt, und konfiguriert ist zum Definieren undurchsichtiger Bereiche oder Zonen um das transparente Band, die die Übertragung von elektromagnetischer Strahlung blockieren, sodass nur das transparente Band den Durchtritt von elektromagnetischer Strahlung durch die Bildgebungslinse (4b) oder die erste Blendenanordnung (4) gestattet.

3. System nach Anspruch 2,

   wobei das Filterauswahlmittel (FSM) konfiguriert ist zum Verdrängen oder Durchlaufen des transparenten Bands zum Gestatten eines Spektraldurchlaufs, oder
   wobei das Filterauswahlmittel (FSM) konfiguriert ist zum Verdrängen oder Durchlaufen des transparenten Bands zum Ausführen eines Push-Broom-Scans.

4. System nach einem der vorhergehenden Ansprüche, wobei das Filterauswahlmittel (FSM) einzig eine elektronisch adressierbare optische Einrichtung umfassend einen Flüssigkristall und mehrere elektronisch adressierbare Zonen, Bereiche oder Pixel, die Flüssigkristallmaterial enthalten, umfasst oder daraus besteht oder wobei das Filterauswahlmittel (FSM) einzig einen Raumlichtmodulator, eine Flüssigkristalleinrichtung (LCD) oder eine digitale Mikrospiegeleinrichtung (DMD) umfasst oder daraus besteht.

5. System nach einem der vorhergehenden Ansprüche, wobei das optische System die erste Blendenanordnung (4) enthält und die erste Blendenanordnung (4) eine Anordnung (4) aus bildformenden Elementen enthält, die mehrere Linsen, Mikrolinsen oder Nadellöcher umfasst, und wobei die erste Blendenanordnung (4) in dem optischen System angeordnet ist zum Formen von mehreren ganzen oder integralen Nachbildungen eines Objekts (1) auf einer Sensorebene (SP) oder einem Sensor (S), und wobei der Filter (F) abgebildet wird zum Formen der mindestens einen Projektion des Filters (F) auf der ersten Blendenanordnung (4) zum Filtern der mehreren Nachbildungen des Objekts (1).

6. System nach einem der vorhergehenden Ansprüche, wobei der optische Filter (F) einen Mosaikfilter mit mehreren individuellen optischen Filtern umfasst oder ein solcher ist.

7. System nach einem der vorhergehenden Ansprüche 1 bis 5, wobei der optische Filter (F) konfiguriert ist zum Filtern der gleichen Wellenlänge entlang einer konstanten Filterungsrichtung (CFD) des Filters (F).

8. System gemäß dem vorausgegangenen Anspruch, wobei der optische Filter (F) einen Filterungsabschnitt (FS) umfasst, der Filterungsabschnitt (FS) einen Einfallsoberflächenbereich (IA) definiert, der Filterungsabschnitt (FS) die konstante Filterungsrichtung (CFD) enthält und weiter konfiguriert ist zum kontinuierlichen Filtern mit unterschiedlichen Wellenlängen entlang einer Richtung des Einfallsoberflächenbereichs (IA) nach einer vertikalen Richtung zu der konstanten Filterungsrichtung.

9. System nach einem der vorhergehenden Ansprüche 7 bis 8,

wobei ein Filterungsabschnitt (FS) weiter konfiguriert ist zum kontinuierlichen Filtern bei unterschiedlichen Wellenlängen entlang einer beliebigen Richtung oder aller Richtungen nichtparallel zu der konstanten Filterungsrichtung (CFD) über dem Einfallsoberflächenbereich (IA).

10. System nach einem der vorhergehenden Ansprüche,

wobei das System die Objektivlinse (2), eine zweite Linse (3) und die Anordnung (4) von bildformenden Elementen bzw. die Bildgebungslinse (4b), entlang der optischen Achse (8) angeordnet, umfasst, wobei der optische Filter (F) und das Filterauswahlmittel (FSM) sich an einer Position stromaufwärts von der Objektivlinse (2) befinden, sodass der Filter (F) durch das Objektiv (2) und die zweite Linse (3) auf mindestens einen Teil der Anordnung (4) von bildformenden Elementen oder die Bildgebungslinse (4b) abgebildet wird; und die Anordnung (4) von bildformenden Elementen oder die Bildgebungslinse (4b) ein Objekt (1) auf eine Bildsensorebene (SP) abbildet zum Liefern mindestens eines Bilds oder mehrerer Bilder des Objekts (1) an der Bildsensorebene (SP).

11. System nach einem der vorhergehenden Ansprüche 1 bis 9,

wobei das System die Objektivlinse (2), eine Feldblende (9), eine zweite Linse (3) und die Anordnung (4) von bildformenden Elementen bzw. die Bildgebungslinse (4b), entlang der optischen Achse (8) angeordnet, umfasst, wobei der optische Filter (F) und das Filterauswahlmittel (FSM) sich an einer Position stromaufwärts von der Objektivlinse (2) oder mit dem Filter (F) in Kontakt mit der Objektivlinse (2) befinden, sodass der Filter (F) durch das Objektiv (2) und die zweite Linse (3) auf mindestens einen Teil der Anordnung (4) von bildformenden Elementen oder die Bildgebungslinse (4b) abgebildet wird; und die Anordnung (4) von bildformenden Elementen oder die Bildgebungslinse (4b) ein Objekt (1) auf die Bildsensorebene (SP) abbildet zum Liefern von mehreren Bildern des Objekts (1) an der Bildsensorebene (SP).

12. System nach einem der vorhergehenden Ansprüche, wobei das System ein telezentrisches im Bildraum und/oder im Objektraum ist; oder

wobei die Anordnung (4) der bildformenden Elemente und/oder die Objektivlinse (2) montiert sind, um entlang der optischen Achse (8) mobil zu sein, damit die räumliche Auflösung des optischen Systems erhöht werden kann.

13. Einrichtung mit dem optischen System nach einem der vorhergehenden Ansprüche, wobei die Einrichtung ein Telefon oder ein Smartphone ist, oder ein System mit einem Smartphone und dem optischen System nach einem der vorhergehenden Ansprüche, bereitgestellt als eine zusätzliche Einrichtung für das Smartphone.

**Revendications**

1. Système optique, comportant :

- au moins une lentille d'objectif (2) ;
- un filtre optique (F) ; et
- une lentille d'imagerie (4b), ou un premier réseau d'ouvertures (4) comprenant une pluralité d'éléments d'ouverture ;

l'au moins une lentille d'objectif (2), le filtre optique (F), et la lentille d'imagerie (4b) ou le premier réseau d'ouvertures (4) étant agencés suivant un axe optique (8) pour former au moins une projection du filtre optique (F) sur la lentille d'imagerie (4b) ou sur le premier réseau d'ouvertures (4), le système optique étant **caractérisé en ce qu'**il comporte en outre un moyen de sélection de filtre (FSM) destiné à sélectionner un rayonnement électromagnétique filtré à fournir à la lentille d'imagerie (4b) ou au premier réseau d'ouvertures (4) ; et **en ce que** l'au moins une lentille d'objectif (2) occupe une position en amont du premier réseau d'ouvertures (4) ou de la lentille d'imagerie (4b), et le filtre optique (F) et le moyen de sélection de filtre (FSM) occupent une position en amont de l'au moins une lentille d'objectif (2) de façon à ce que le premier réseau d'ouvertures (4) ou la lentille d'imagerie (4b) image un objet (1) situé en amont de la lentille d'objectif (2) sur un plan de capteur d'image (SP) pour fournir au moins une ou une pluralité d'images de l'objet (1) au niveau du plan de capteur d'image (SP) et de façon à ce que le filtre optique (F) soit imagé par la lentille d'objectif (2) sur au moins une partie du premier réseau d'ouvertures (4) ou de la lentille d'imagerie (4b) pour filtrer l'au moins une ou la pluralité d'images de l'objet (1) comme si le filtre optique (F) était physiquement placé au contact du premier réseau d'ouvertures (4) ou de la lentille d'imagerie (4b).

2. Système selon l'une quelconque des revendications précédentes, le moyen de sélection de filtre (FSM) étant configuré pour sélectionner une zone de filtrage ou des zones de filtrage du filtre (F) pour sélectionner le rayonnement électromagnétique à fournir à la lentille d'imagerie (4b) ou au premier réseau d'ouvertures (4) ; ou

le moyen de sélection de filtre (FSM) comprenant une pluralité de régions adressables configurées pour laisser passer ou bloquer un rayonnement électromagnétique au travers desdites régions pour respectivement laisser passer ou bloquer un rayonnement électromagnétique au travers du moyen de sélection de filtre ; ou
le moyen de sélection de filtre (FSM) étant configuré pour définir au moins un ou une pluralité de motifs au travers desquels le rayonnement électromagnétique passe ; ou
le moyen de sélection de filtre (FSM) étant configuré pour définir une bande transparente au travers de laquelle le rayonnement électromagnétique passe, et configuré pour définir autour de la bande transparente des régions ou zones opaques qui bloquent la transmission du rayonnement électromagnétique de façon à ce que seule la bande transparente laisse passer le rayonnement électromagnétique au travers de la lentille d'imagerie (4b) ou du premier réseau d'ouvertures (4).

3. Système selon la revendication 2, le moyen de sélection de filtre (FSM) étant configuré pour déplacer ou balayer la bande transparente pour permettre un balayage spectral, ou
le moyen de sélection de filtre (FSM) étant configuré pour déplacer ou balayer la bande transparente pour réaliser un balayage de type push-broom.

4. Système selon l'une quelconque des revendications précédentes, le moyen de sélection de filtre (FSM) comprenant ou se composant uniquement d'un dispositif optique adressable électroniquement comprenant un cristal liquide et une pluralité de zones, régions ou pixels adressables électroniquement contenant un matériau cristal liquide ; ou
le moyen de sélection de filtre (FSM) comprenant ou se composant uniquement d'un modulateur spatial de lumière, d'un dispositif à cristaux liquides (LCD), ou d'une matrice de micromiroirs (DMD).

5. Système selon l'une quelconque des revendications précédentes, le système optique comportant le premier réseau d'ouvertures (4) et le premier réseau d'ouvertures (4) comportant un réseau (4) d'éléments de formation d'image comprenant une pluralité de lentilles, de microlentilles ou de trous d'épingle ; et le premier réseau d'ouvertures (4) étant agencé dans le système optique pour former une pluralité de répliques entières ou intégrales d'un objet (1) sur un plan de capteur (SP) ou un capteur (S) ; et le filtre (F) étant imagé pour former l'au moins une projection du filtre (F) sur le premier réseau d'ouvertures (4) pour filtrer la pluralité de répliques (1) de l'objet.

6. Système selon l'une quelconque des revendications précédentes, le filtre optique (F) comprenant ou étant un filtre mosaïque comportant une pluralité de filtres optiques individuels.

7. Système selon l'une quelconque des revendications 1 à 5 précédentes, le filtre optique (F) étant configuré pour filtrer la même longueur d'onde suivant une direction de filtrage constante (CFD) du filtre (F).

8. Système selon la revendication précédente, le filtre optique (F) comportant une section de filtrage (FS), la section de filtrage (FS) définissant une surface d'incidence (IA), la section de filtrage (FS) comportant la direction de filtrage constante (CFD) et étant configurée en outre pour réaliser un filtrage continu à des longueurs d'onde différentes suivant une direction de la surface d'incidence (IA) qui suit une direction verticale par rapport à la direction de filtrage constante.

9. Système selon l'une quelconque des revendications 7 à 8, la section de filtrage (FS) étant configurée en outre pour réaliser un filtrage continu à des longueurs d'onde différentes suivant une direction quelconque non parallèle, ou toutes les directions non parallèles, à la direction de filtrage constante (CFD) sur toute la surface d'incidence (IA).

10. Système selon l'une quelconque des revendications précédentes, le système comprenant la lentille d'objectif (2), une deuxième lentille (3), et le réseau (4) d'éléments de formation d'image ou la lentille d'imagerie (4b) respectivement agencés suivant l'axe optique (8), le filtre optique (F) et le moyen de sélection de filtre (FSM) occupant une position en amont de la lentille d'objectif (2) de façon à ce que le filtre (F) soit imagé par l'objectif (2) et la deuxième lentille (3) sur au moins une partie du réseau (4) d'éléments de formation d'image ou de la lentille d'imagerie (4b) ; et le réseau (4) d'éléments de formation d'image ou la lentille d'imagerie (4b) imageant un objet (1) sur un plan de capteur d'image (SP) pour fournir au moins une ou une pluralité d'images de l'objet (1) au niveau du plan de capteur d'image (SP).

11. Système selon l'une quelconque des revendications 1 à 9, le système comprenant la lentille d'objectif (2), un diaphragme de champ (9), une deuxième lentille (3) et le réseau (4) d'éléments de formation d'image ou la lentille d'imagerie (4b) respectivement agencés suivant l'axe optique (8), le filtre optique (F) et le moyen de sélection de filtre (FSM) occupant une position en amont de la lentille d'objectif (2) ou avec le filtre (F) au contact de la lentille d'objectif (2) de façon à ce que le filtre (F) soit imagé par l'objectif (2) et la deuxième lentille (3) sur au moins une partie du réseau (4) d'éléments de formation d'image ou de la lentille d'imagerie (4b) ; et le réseau (4) d'éléments de formation d'image ou la lentille d'imagerie (4b) imageant un objet (1) sur un plan de capteur d'image (SP) pour fournir une pluralité d'images de l'objet (1) au niveau du plan de capteur d'image (SP).

12. Système selon l'une quelconque des revendications précédentes, le système étant télécentrique dans l'espace image et/ou dans l'espace objet ; ou le réseau (4) d'éléments de formation d'image et/ou la lentille d'objectif (2) étant montés mobiles suivant l'axe optique (8) pour permettre d'augmenter la résolution spatiale du système optique.

13. Dispositif comportant le système optique selon l'une quelconque des revendications précédentes, le dispositif étant un téléphone ou un smartphone, ou système comportant un smartphone et le système optique selon l'une quelconque des revendications précédentes prenant la forme d'un dispositif d'appoint pour le smartphone.

Figure 1a

Figure 1b

Figure 1c

Figure 1d

Figure 1e

Figure 1f

Figure 1g

Figure 1h

EP 3 596 434 B1

Figure 1i

Figure 1j

Figure 1k

Figure 1L

Figure 1m

Hexagonal array: two lattice vectors $a_1$ and $a_2$

Natural – Alignment, i.e. Sampling element or filter aligned with $a_1$ or $a_2$ e.g. $a_1$ // **k**

filter function f(x,y)

Constant df/dx=0

F(y) sampling function

The orientation angle can be any angle between direction $a_1$ (preferably not parallel to direction $a_1$) and direction $a_1+a_2$

## Max angle

$\theta_{max}$ is the angle $\underline{a}_1 \underline{+a}_2$

(fyi= cos A = $(b^2+c^2-a^2)$/2bc

For hexagonal array:

$a_1$ = (1,0) or $a_2$ = (1/2, sqrt(3)/2)

$$\theta_{max} = \cos^{-1}(0.5)$$

## Min angle

$\theta_{min}$ is the angle N$\underline{a}_1$ and vertical component of $a_2$/2

tan θ = $(a_{v2}/2) / (Na_1)$

$$\theta_{min} = \tan^{-1}(a_{v2}/ 2Na_1)$$

For hexagonal array

$a_1$ = (1,0) or $a_2$ =(1/2, sqrt(3)/2)

$$\theta_{min} = \tan^{-1}(sqrt(3)/ 4N)$$

# Figure 1n

Figure 2

EP 3 596 434 B1

Figure 3

EP 3 596 434 B1

Figure 4

Figure 5

Figure 6

Figure 7

EP 3 596 434 B1

Figure 8

**Figure 9A**

**Figure 9B**

EP 3 596 434 B1

Figure 9C

Figure 9D

EP 3 596 434 B1

Figure 9E

Figure 9F

Figure 10

Figure 11

Figure 12

Figure 13

Figure 14

Figure 15

Figure 16

Figure 17

EP 3 596 434 B1

Figure 18A

Figure 18B

Figure 19

EP 3 596 434 B1

**REFERENCES CITED IN THE DESCRIPTION**

**Patent documents cited in the description**

- WO 2014031557 A1
- US 2014375776 A1
- WO 2013048548 A1
- WO 2013064512 A1

**Non-patent literature cited in the description**

- Review of snapshot spectral imaging technologies. **HAGEN NATHAN et al.** OPTICAL ENGINEERING. SOC. OF PHOTO-OPTICAL INSTRUMENTATION ENGINEERS, 01 September 2013, vol. 52, 90901